(19) Europäisches Patentamt
European Patent Office
Office européen des brevets

(11) **EP 3 564 280 B1**

(12) **EUROPEAN PATENT SPECIFICATION**

(45) Date of publication and mention
of the grant of the patent:
**26.07.2023 Bulletin 2023/30**

(21) Application number: **17887500.1**

(22) Date of filing: **28.12.2017**

(51) International Patent Classification (IPC):
**C08F 236/22** (2006.01)     **C08F 212/08** (2006.01)
**C08F 236/04** (2006.01)     **C08F 297/04** (2006.01)
**C08F 8/04** (2006.01)

(52) Cooperative Patent Classification (CPC):
(C-Sets available)
**C08F 297/04; C08C 19/02; C08F 2/06; C08F 8/04;**
**C08F 212/08**                               (Cont.)

(86) International application number:
**PCT/JP2017/047395**

(87) International publication number:
**WO 2018/124307 (05.07.2018 Gazette 2018/27)**

(54) **COPOLYMER OF 1, 3, 7-OCTATRIENE AND STYRENE AND HYDRIDE THEREOF**

COPOLYMER AUS 1,3,7-OCTATRIEN UND STYROL UND HYDRID DAVON

COPOLYMÈRE DE 1,3,7-OCTATRIÈNE ET DE STYRÈNE AINSI QU'HYDRIDE DE CELUI-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2016 JP 2016257108**

(43) Date of publication of application:
**06.11.2019 Bulletin 2019/45**

(60) Divisional application:
**22164445.3 / 4 056 604**

(73) Proprietor: **Kuraray Co., Ltd.**
**Kurashiki-shi, Okayama 710-0801 (JP)**

(72) Inventors:
• **SUNAGA, Shuichi**
**Kurashiki-shi**
**Okayama 710-0801 (JP)**
• **TSUJI, Tomoaki**
**Tokyo 100-8115 (JP)**
• **HORI, Takashi**
**Kurashiki-shi**
**Okayama 710-0801 (JP)**
• **INUBUSHI, Yasutaka**
**Kurashiki-shi**
**Okayama 710-0801 (JP)**

(74) Representative: **Müller-Boré & Partner**
**Patentanwälte PartG mbB**
**Friedenheimer Brücke 21**
**80639 München (DE)**

(56) References cited:
**JP-A- H11 502 541       JP-B1- S4 916 268
JP-B1- S4 916 269       US-A- 3 285 889
US-A- 3 939 131       US-A- 4 229 549**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 8/04, C08F 212/08;**
**C08F 8/04, C08F 297/04;**
**C08F 212/08, C08F 236/04;**
**C08F 212/08, C08F 236/04, C08F 236/06;**
**C08F 212/08, C08F 236/04, C08F 236/06,**
**C08F 236/08;**
**C08F 212/08, C08F 236/04, C08F 236/08;**
**C08F 212/08, C08F 236/22;**
**C08F 212/08, C08F 236/22, C08F 236/06;**

**C08F 212/08, C08F 236/22, C08F 236/06,**
**C08F 236/08;**
**C08F 212/08, C08F 236/22, C08F 236/08**

**Description**

Field of the Invention

The present invention relates to a copolymer of 1,3,7-octatriene and styrene and a hydride thereof.

Background of the Invention

For producing films, adhesives, elastic bodies, fibers, foamed bodies, and so on, it is preferred to use a flexible, elastic, and tough polymer, and it is known that a polymer having a glass transition temperature lower than a use temperature thereof (usually a room temperature, e.g., about 25°C) is suitable. As the polymer having a glass transition temperature lower than room temperature, a thermoplastic resin is exemplified, and as a raw material of the thermoplastic resin, butadiene which is inexpensive and easily utilizable is frequently utilized. However, in order to improve physical properties of the films, adhesives, elastic bodies, fibers, foamed bodies, and so on, there is a limit because the same raw material is used, and therefore, conjugated diene compounds which are not often used so far are interested. 1,3,7-Octatriene is one of such conjugated diene compounds.
A polymer containing a structural unit derived from 1,3,7-octatriene has a terminal double bond in a side chain thereof, and therefore, it can be denatured through various reactions, for example, epoxidation, halogenation, and graft polymerization with other low-molecular compound. In addition, maleic anhydride, acrolein, or the like can also be added while utilizing reactivity of the double bond existing in the polymer. The thus-obtained chemically denatured polymer is expected to be spread as a functional material, such as an adhesive and a lubricating agent.
However, there are very few reported cases regarding polymers containing a structural unit derived from 1,3,7-octatriene. For example, there are disclosed a polymerization method of 1,3,7-octatriene by using an anionic polymerization initiator (see PTL 1); a polymerization method of 1,3,7-octatriene by using a cationic polymerization initiator (see PTL 2); and a polymerization method of 1,3,7-octatriene by using a titanium-based Ziegler-type catalyst (see NPL 1). However, as for a copolymer of 1,3,7-octatriene and other conjugated diene compound, there is disclosed only a polymerization method using a neodymium-based Ziegler-type catalyst (see NPL 2).
In NPL 2 regarding the production method of a copolymer of 1,3,7-octatriene and other conjugated diene compound, as a copolymer formed from 1,3,7-octatriene and isoprene, there is disclosed a copolymer in which the content of a structural unit derived from 1,3,7-octatriene is 21.0 mol% or less relative to a total amount of the structural unit derived from 1,3,7-octatriene and a structural unit of isoprene, and when the molecular weight distribution (Mw/Mn) is narrowest as 1.44, the weight average molecular weight (Mw) is 77,760, whereas when the weight average molecular weight (Mw) is largest as 201,300, the molecular weight distribution (Mw/Mn) expands to 1.83.

Citation List

Patent Literature

    PTL 1: JP 49-16269 B
    PTL 2: JP 49-16268 B

Non-Patent Literature

    NPL 1: The Journal of Organic Chemistry, Vol. 28, pp.2699-2703 (1963)
    NPL 2: Advanced Synthesis & Catalysis, Vol. 350, pp.431-438 (2008)

JP-H11-502541-A discloses absorbent articles containing a foam comprising crosslinked polymers made from 1,3,7-octatriene, wherein styrene mentioned in a list of possible comonomers. Summary of Invention

Technical Problem

However, a copolymer of 1,3,7-octatriene and styrene has not hitherto been developed.
Then, a problem of the present invention is to provide a copolymer containing a structural unit derived from 1,3,7-octatriene and a structural unit derived from styrene, and a hydride thereof.

Solution to Problem

The present inventors made extensive and intensive investigations. As a result, the reason why the copolymer of 1,3,7-trioctatriene and styrene has not hitherto been developed resides in the matter that difficulty of polymerization control was supposed. However, as a result of actual experiments made by the present inventors, the copolymer of 1,3,7-octatriene and styrene could be produced. In addition, it has been found that a cause of the aforementioned difficulty of polymerization control resides in not 1,3,7-octatriene per se but impurities contained in 1,3,7-octatriene; that a slight amount of specific impurities contained in 1,3,7-octatriene largely causes a bad influence on the polymerization reaction between 1,3,7-octatriene and styrene; and that by regulating the amount of the impurities to a predetermined value or less, the polymerization reaction of 1,3,7-octatriene and styrene becomes easy to be controlled. In particular, the present inventors have found that the aforementioned copolymer can be readily produced by using 1,3,7-octatriene having a total content of a peroxide and its decomposition product of 0.30 mmol/kg or less.

Specifically, the present invention provides the following [1] to [10].

[1] A copolymer containing a structural unit derived from 1,3,7-octatriene and a structural unit derived from styrene and having a molecular weight distribution (Mw/Mn) of 1.5 or less.

[2] The copolymer as set forth in the above [1], having a weight average molecular weight (Mw) of 1,000 to 1,000,000.

[3] The copolymer as set forth in the above [1] or [2], having a weight average molecular weight (Mw) of 5,000 to 900,000.

[4] The copolymer as set forth in any of the above [1] to [3], having a weight average molecular weight (Mw) of 50,000 to 700,000.

[5] The copolymer as set forth in any of the above [1] to [4], having a living anionic active species at a molecular end thereof.

[6] The copolymer as set forth in any of the above [1] to [4], not having a living anionic active species at a molecular end thereof.

[7] The copolymer as set forth in any of the above [1] to [6], further containing a structural unit derived from a conjugated diene compound having 4 or more carbon atoms.

[8] The copolymer as set forth in the above [7], wherein the conjugated diene compound having 4 or more carbon atoms is at least one selected from the group consisting of butadiene, isoprene, 2,3-dimethyl-1,3-butadiene, 4,5-diethyl-1,3-butadiene, 2-phenyl-1,3-butadiene, 2-hexyl-1,3-butadiene, 2-benzyl-1,3-butadiene, 2-p-toluyl-1,3-butadiene, 2-methyl-1,3-pentadiene, 3-methyl-1, 3-pentadiene, 2, 3-dimethyl-1, 3-pentadiene, 2,3-diethyl-1,3-pentadiene, 1,3-hexadiene, 2,3-dimethyl-1,3-hexadiene, 2,3-diethyl-1,3-heptadiene, 3-butyl-1,3-octadiene, 2,3-dimethyl-1,3-octadiene, 4,5-diethyl-1,3-octadiene, 1,3-cyclohexadiene, and myrcene.

[9] The copolymer as set forth in any of the above [1] to [8], wherein the binding form between the structural unit derived from 1,3,7-octatriene and the structural unit derived from styrene, and in the case of further comprising the structural unit derived from the conjugated diene compound, is a random, a complete alternate, a gradient, a block, a tapered binding form or combinations thereof.

[10] A hydride of the copolymer as set forth in any of the above [1] to [4] and [6] to [9].

Advantageous Effects of Invention

In accordance with the present invention, it is possible to provide a copolymer containing a structural unit derived from 1,3,7-octatriene and a structural unit derived from styrene. In addition, it is possible to make a molecular weight distribution (Mw/Mn) of the copolymer narrow.

Description of Embodiments

[Copolymer]

The copolymer of the present invention is a copolymer containing a structural unit derived from 1,3,7-octatriene and a structural unit derived from styrene.

The copolymer of the present invention can be produced by using, as a raw material, 1,3,7-octatriene having a total content of a peroxide and its decomposition product of 0.30 mmol/kg or less. In particular, the copolymer of the present invention can be produced by performing anionic polymerization using such a raw material. In addition, by using such a raw material, it is also possible to achieve a high conversion of the raw material for a short polymerization time.

The purity of 1,3,7-octatriene is preferably more than 98.0% or more, 98.5% or more, more preferably 98.8% or more, and still more preferably 99.0% or more. Here, in the present invention, the purity of 1,3,7-octatriene is obtained by calculating the sum total of peak areas capable of being assigned to the whole of octatrienes by means of an analysis of gas chromatography and determining a percentage of a peak area of 1,3,7-octatriene relative to the sum total of these peak areas, and more specifically, it is one determined by a method described in the section of Examples. Here, the whole of octatrienes means all of 1,3,7-octatriene and double bond isomers thereof, such as 1,3,6-octatriene, 2,4,6-octatriene, and 1,4,6-octatriene.

As mentioned above, examples of the impurities which may be included in 1,3,7-octatriene include at least one selected from the group consisting of a peroxide and its decomposition product. A total content of the peroxide and its decomposition product in the 1,3,7-octatriene is preferably 0.30 mmol/kg or less, more preferably 0.15 mmol/kg or less, and still more preferably 0.10 mmol/kg or less (provided that one of them may be 0 mmol/kg). Here, in the present invention, the total content of the peroxide and its decomposition product in the 1,3,7-octatriene is a value determined by titrating iodine ($I_2$) generated by allowing potassium iodide to act on 1,3,7-octatriene with sodium thiosulfate, and more specifically, it is one determined by a method described in the section of Examples. Examples of the peroxide include 5-hydroperoxy-1,3,7-octatriene and 6-hydroperoxy-1,3,7-octatriene. In addition, though the decomposition product of the peroxide is not particularly limited so long as it is a compound capable of being produced through decomposition of 5-hydroperoxy-1,3,7-octatriene or 6-hydroperoxy-1,3,7-octatriene, examples thereof include 5-hydroxy-1,3,7-octatriene and 6-hydroxy-1,3,7-octatriene. These are impurities which may be produced through oxygen oxidation of 1,3,7-octatriene. As the peroxide and its decomposition product, in particular, 5-hydroperoxy-1,3,7-octatriene, 6-hydroperoxy-1,3,7-octatriene, 5-hydroxy-1,3,7-octatriene, and 6-hydroxy-1,3,7-octatriene are an important compound.

As for the 1,3,7-octatriene, it is extremely difficult to perform distillation separation from a by-product, for example, 4-vinylcyclohexene and 1,3,6-octatriene, and therefore, in general, 1,3,7-octatriene having a purity of more than 98.0% is not easily obtainable, and its purity is typically liable to be 97% or less. But, by carrying out the method described in JP 2016-216385 A or JP 47-17703 A, it is possible to produce 1,3,7-octatriene having a purity of more than 98.0%, and in the present invention, this 1,3,7-octatriene can be utilized.

With respect to the copolymer of the present invention, a molecular weight distribution (Mw/Mn) thereof is 1.5 or less, especially preferably 1.30 or less, and most preferably 1.20 or less. Though a lower limit the molecular weight distribution (Mw/Mn) is not particularly limited, typically, it often becomes 1.03 or more, and it may also be 1.07 or more.

With respect to the copolymer of the present invention, a weight average molecular weight (Mw) thereof is preferably 1,000 to 1,000,000, more preferably 5,000 to 900,000, still more preferably 10,000 to 800,000, yet still more preferably 10,000 to 700,000, even yet still more preferably 30,000 to 700,000, even yet still more preferably 50,000 to 700,000, especially preferably 50,000 to 460,000, and most preferably 100,000 to 400,000.

Here, in the present invention, the weight average molecular weight (Mw) and the number average molecular weight (Mn) are each a molecular weight as expressed in terms of standard polystyrene as determined by means of gel permeation chromatography (GPC) measurement, and in more detail, they are each a value as measured by the measurement method described in the section of Examples. In addition, the molecular weight distribution (Mw/Mn) is a value as calculated therefrom.

With respect to the copolymer of the present invention, it is preferred that not only the weight average molecular weight (Mw) is high, and also the molecular weight distribution (Mw/Mn) is narrow according to the present invention. But, in general, when the weight average molecular weight (Mw) is made high, the molecular weight distribution (Mw/Mn) tends to become broad. On the other hand, the present invention is able to provide a copolymer in which the molecular weight distribution (Mw/Mn) is kept narrow, and therefore, its industrial value is large.

The copolymer of the present invention has only to contain a structural unit derived from 1,3,7-octatriene and a structural unit derived from styrene and may further contain a structural unit derived from other conjugated diene compound. In addition, the copolymer of the present invention may be a copolymer formed of only a structural unit derived from 1,3,7-octatriene and a structural unit derived from styrene.

The other conjugated diene compound is preferably a conjugated diene compound having 4 or more carbon atoms; more preferably at least one selected from the group consisting of butadiene, isoprene, 2,3-dimethyl-1,3-butadiene, 4,5-diethyl-1,3-butadiene, 2-phenyl-1,3-butadiene, 2-hexyl-1,3-butadiene, 2-benzyl-1,3-butadiene, 2-p-toluyl-1,3-butadiene, 2-methyl-1,3-pentadiene, 3-methyl-1,3-pentadiene, 2,3-dimethyl-1,3-pentadiene, 2,3-diethyl-1,3-pentadiene, 1,3-hexadiene, 2,3-dimethyl-1,3-hexadiene, 2,3-diethyl-1,3-heptadiene, 3-butyl-1,3-octadiene, 2,3-dimethyl-1,3-octadiene, 4,5-diethyl-1,3-octadiene, 1,3-cyclohexadiene, and myrcene (7-methyl-3-methyleneocta-1,6-diene); and still more preferably at least one selected from the group consisting of butadiene and isoprene.

The copolymer of the present invention may or may not be denatured through copolymerization with an anionic polymerizable compound. In the case where the copolymer of the present invention is denatured with an anionic polymerizable compound, the content of the structural unit derived from the anionic polymerizable compound is preferably 5 mol% or less, and more preferably 3 mol% or less in the whole of structural units.

The anionic polymerizable compound is not particularly limited so long as it is a compound other than 1,3,7-octatriene, styrene, and the other conjugated diene compound and is a compound capable of undergoing anionic polymerization. Examples thereof include aromatic vinyl compounds, such as 2-chlorostyrene, 4-chlorostyrene, α-methylstyrene, α-methyl-4-methylstyrene, 2-methylstyrene, 3-methylstyrene, 4-methylstyrene, 2,4-dimethylstyrene, 2,5-dimethylstyrene, 3,4-dimethylstyrene, 3,5-dimethylstyrene, 2-ethylstyrene, 3-ethylstyrene, 4-ethylstyrene, 4-n-propylstyrene, 4-isopropylstyrene, 4-tert-butylstyrene, 4-cyclohexylstyrene, 4-dodecylstyrene, 2-ethyl-4-benzylstyrene, 4-(4-phenyl-n-butyl)styrene, 1-vinylnaphthalene, 2-vinylnaphthalene, 1,1-diphenylethylene, N,N-dimethyl-p-aminoethylstyrene, N,N-diethyl-p-aminoethylstyrene, 1,2-divinylbenzene, 1,3-divinylbenzene, 1,4-divinylbenzene, 1,2-divinyl-3,4-dimethylbenzene, 2,4-divinylbiphenyl, 1,3-divinylnaphthalene, 1,2,4-trivinylbenzene, 3,5,4'-trivinylbiphenyl, 1,3,5-trivinylnaphthalene, and 1,5,6-trivinyl-3,7-diethylnaphthalene; $\alpha,\beta$-unsaturated nitriles, such as acrylonitrile, methacryloni-trile, and ethacrylonitrile; $\alpha,\beta$-unsaturated carboxylic acids, such as acrylic acid, methacrylic acid, crotonic acid, 3-methylcrotonic acid, 3-butenoic acid, maleic acid, fumaric acid, itaconic acid, citraconic acid, and mesaconic acid; $\alpha,\beta$-un-saturated carboxylic acid esters, such as methyl acrylate, ethyl acrylate, propyl acrylate, butyl acrylate, sec-butyl acrylate, tert-butyl acrylate, hexyl acrylate, 2-ethylhexyl acrylate, lauryl acrylate, stearyl acrylate, methyl methacrylate, ethyl methacrylate, propyl methacrylate, isopropyl methacrylate, butyl methacrylate, sec-butyl methacrylate, tert-butyl methacrylate, hexyl methacrylate, 2-ethylhexyl methacrylate, lauryl methacrylate, stearyl methacrylate, dimethyl maleate, diethyl maleate, dibutyl maleate, dimethyl fumarate, diethyl fumarate, dibutyl fumarate, dimethyl itaconate, diethyl itaconate, and dibutyl itaconate; and acrylamides, such as N-methylacrylamide, N-ethylacrylamide, N-propylacrylamide, N-butylacrylamide, N-octylacrylamide, N-phenylacrylamide, N-glycidylacrylamide, N,N'-ethylenebisacrylamide, N,N-dimethylacrylamide, N-ethyl-N-methylacrylamide, N,N-diethylacrylamide, N,N-dipropylacrylamide, N,N-dioctylacrylamide, N, N-diphenylacrylamide, N-ethyl-N-glycidylacrylamide, N,N-diglycidylacrylamide, N-methyl-N-(4-glycidyloxybutyl)acrylamide, N-methyl-N-(5-glycidyloxypentyl)acrylamide, N-methyl-N-(6-glycidyloxyhexyl)acrylamide, N-acryloylpyrrolidine, N-acryloyl-L-proline methyl ester, N-acryloylpiperidine, N-acryloylmorpholine, 1-acryloylimidazole, N,N'-diethyl-N,N'-ethylenebisacrylamide, N,N'-dimethyl-N,N'-hexamethylenebisacrylamide, and di(N,N'-ethylene)bisacrylamide.

The anionic polymerizable compounds may be used alone or may be used in combination of two or more thereof.

The copolymer of the present invention may or may not contain a structural unit derived from a coupling agent. In the case where the copolymer of the present invention contains a structural unit derived from a coupling agent, the content of the structural unit derived from a coupling agent is preferably 2.5 mol% or less, and more preferably 1.0 mol% or less in the whole of structural units.

Examples of the coupling agent include dichloromethane, dibromomethane, dichloroethane, dibromoethane, dibromobenzene, and phenyl benzoate.

(Binding Mode)

In the copolymer of the present invention, as a representative binding mode of 1,3,7-octatriene, a 1,2-bond, a 1,4-bond, a 3,4-bond, and a 4,1-bond are included, and the binding order and the content ratio of the respective binding modes are not particularly limited. In the present invention, the 1,4-bond and the 4,1-bond are considered to be identical with each other.

With respect to the binding mode of 1,3,7-octatriene, the content ratio of the 1,2-bond relative to the whole of binding modes is preferably 35 to 65 mol%, and more preferably 40 to 60 mol%. The content ratio of the 1,4-bond relative to the whole of binding modes is preferably 20 to 65 mol%, more preferably 30 to 60 mol%, and still more preferably 40 to 60 mol%. Taking into consideration the aforementioned content ratio of the 1,2-bond and the aforementioned content ratio of the 1,4-bond, the content ratio of the 3,4-bond relative to the whole of binding modes becomes the remainder. Namely, the content ratio of the 3,4-bond relative to the whole of binding modes is determined from "100 - [(content ratio of the 1,2-bond) + (content ratio of the 1,4-bond)]".

Similarly, the binding mode of the other conjugated diene compound is not particularly limited, and the binding order and the content ratio of the respective binding modes are not particularly limited. For example, as a representative binding mode of butadiene, a 1,2-bond and a 1,4-bond are included, and the binding order and the content ratio of the respective binding modes are not particularly limited.

With respect to the binding mode of butadiene, for example, the content ratio of the 1,2-bond relative to the whole of binding modes is preferably 5 to 60 mol%, more preferably 10 to 50 mol%, and still more preferably 15 to 45 mol%. The content ratio of the 1,4-bond relative to the whole of binding modes is the remainder of the content ratio of the 1,2-bond relative to the whole of binding modes.

As a representative binding mode of isoprene, a 1,2-bond, a 3,4-bond, and a 1,4-bond are included, and the binding order and the content ratio of the respective binding modes are not particularly limited.

With respect to the binding mode of isoprene, for example, the content ratio of the 1,4-bond relative to the whole of binding modes is preferably 40 to 95 mol%, more preferably 50 to 90 mol%, and still more preferably 60 to 85 mol%. The content ratio of the 3,4-bond relative to the whole of binding modes is preferably 5 to 60 mol%, more preferably 5 to 40 mol%, and still more preferably 15 to 40 mol%. Taking into consideration the content ratio of the 1,4-bond and the content ratio of the 3,4-bond, the content of the 1,2-bond relative to the whole of binding modes becomes a remainder thereof,

The ratio of each of the binding modes is determined by the $^{13}$C-NMR measurement. Specifically, it can be determined according to the method described in the section of Examples.

(Binding Form)

In the copolymer of the present invention, a binding form between the structural unit derived from 1,3,7-octatriene and the structural unit derived from styrene, and in the case of further containing the structural unit derived from the other conjugated diene compound, a binding form thereamong, are not particularly limited; however, examples of the binding form include random, complete alternate, gradient, block, and tapered binding forms as well as combinations thereof; a random binding form or a block binding form is preferred; and a random binding form is more preferred from the viewpoint of easiness of production. Though the block is not particularly limited, examples thereof include a diblock, a triblock, and a tetrablock, and a diblock and a triblock are preferred. In the block containing the structural unit derived from 1,3,7-octatriene, the aforementioned structural unit derived from other conjugated diene compound may be co-existent.

In the copolymer of the present invention, though the content of the structural unit derived from 1,3,7-octatriene (sometimes referred to as "1,3,7-octatriene content $\alpha$") relative to a total amount of the structural unit derived from 1,3,7-octatriene and the structural unit derived from styrene, and the structural unit derived from the other conjugated diene compound which is optionally used is not particularly limited, for example, it may be 1 to 99 mol%. A lower limit value of the 1,3,7-octatriene content $\alpha$ may be 3 mol%, may be 5 mol%, may be 30 mol%, may be 50 mol% or more, may be 70 mol%, may be 85 mol%, and may be 90 mol%. On the other hand, an upper limit of the 1,3,7-octatriene content $\alpha$ may be 98 mol% or less, may be 95 mol% or less, may be 90 mol% or less, may be 80 mol% or less, may be 70 mol% or less, may be 65 mol% or less, and may be 40 mol% or less. The lower limit value and the upper limit value of the 1,3,7-octatriene content $\alpha$ may be arbitrarily selected, respectively so as to establish consistency.

Though the content of the structural unit derived from styrene relative to a total amount of the structural unit derived from 1,3,7-octatriene, the structural unit derived from styrene, and the structural unit derived from the other conjugated diene compound which is optionally used is not particularly limited, for example, it may be 1 to 99 mol%, may be 2 to 95 mol%, may be 5 to 95 mol%, may be 10 to 80 mol%, may be 20 to 70 mol%, and may be 20 to 50 mol%.

In the case where the copolymer of the present invention contains the structural unit derived from the other conjugated diene compound, its content is a remainder of the aforementioned structural unit derived from 1,3,7-octatriene and the aforementioned structural unit derived from styrene.

On the occasion of producing the copolymer of the present invention through anionic polymerization as mentioned later, the copolymer at a stage after allowing a chain terminator to react after the polymerization reaction is a copolymer not having a living anionic active species at a molecular end thereof, and the present invention provides the foregoing copolymer.

On the occasion of producing the copolymer of the present invention through anionic polymerization as mentioned later, the copolymer at a stage before allowing a chain terminator to react after the polymerization reaction is a copolymer having a living anionic active species at a molecular end thereof (sometimes referred to as "living anionic copolymer"), and the present invention also provides the foregoing copolymer.

(Hydride)

The copolymer of the present invention may also be a hydride of the aforementioned copolymer (in general, also referred to as "hydrogenation product") from the viewpoints of heat resistance and weather resistance. In the case where the copolymer of the present invention is a hydride, though a hydrogenation rate thereof is not particularly limited, in the copolymer, the carbon-carbon double bond is hydrogenated to an extent of preferably 80 mol% or more, more preferably 85 mol% or more, still more preferably 90 mol% or more, especially preferably 93 mol% or more, and most preferably 95 mol% or more. The foregoing value is sometimes referred to as "hydrogenation rate". Though an upper limit value of the hydrogenation rate is not particularly limited, the upper limit value may be 99 mol% or less.

The hydrogenation rate is determined by the $^1$H-NMR measurement of the content of the carbon-carbon double bond after hydrogenation. More specifically, it can be determined according to the method described in the section of Examples.

[Production Method of Copolymer]

A production method of the above-described copolymer may be a method of producing a copolymer containing a structural unit derived from 1,3,7-octatriene and a structural unit derived from styrene, the method including a step of subjecting 1,3,7-octatriene and styrene to anionic polymerization, wherein
impurities which may be contained in the 1,3,7-octatriene include at least one selected from the group consisting of a peroxide and its decomposition product, and a total content of the peroxide and its decomposition product in the 1,3,7-octatriene is 0.30 mmol/kg or less.

The anionic polymerization method is not particularly limited, and a known anionic polymerization method is applicable.

For example, an anionic polymerization initiator is fed into a mixture of 1,3,7-octatriene and styrene, and the aforementioned conjugated diene compound which is optionally used (the raw materials to be subjected to polymerization reaction will be hereinafter sometimes referred to as "raw material monomers"), to undergo polymerization reaction, thereby forming a copolymer having a living anionic active species in the reaction system. Subsequently, a polymerization terminator is added thereto, thereby producing a random copolymer.

Furthermore, a block copolymer may be produced by feeding the anionic polymerization initiator to any one of the raw material monomers and then adding the remaining raw material monomer or monomers to form a copolymer having a living anionic active species, followed by adding a polymerization terminator.

A Lewis base and a solvent may be used, if desired.

For the purpose of suppressing invasion of water and oxygen, etc., which hinder the polymerization reaction, into the reaction system, for example, it is preferred to carry out the polymerization reaction in the interior of a reactor pressurized with an inert gas. When the polymerization reaction is carried out in an inert gas atmosphere, consumption of the anionic polymerization initiator and a growing terminal anion by the reaction with water or oxygen can be suppressed, so that the polymerization reaction can be precisely controlled. Here, the growing terminal anion refers to an anion which the copolymer existing in the reaction system during the polymerization reaction has at a molecular end thereof, and hereinafter, the same is applicable.

It is preferred that 1,3,7-octatriene, styrene, the aforementioned conjugated diene compound, an anionic polymerization initiator as mentioned later, a Lewis base as mentioned later, a solvent as mentioned later, and so on, which are used in the production of the copolymer, do not substantially contain substances which react with the growing terminal anion to hinder the polymerization reaction, for example, oxygen, water, a hydroxy compound, a carbonyl compound, and an alkyne compound, and it is preferred that those materials are stored under a shading condition in an inert gas atmosphere of nitrogen, argon, helium, or the like.

Each of 1,3,7-octatriene, styrene, the anionic polymerization initiator, the Lewis base, and so on may be used upon being diluted with a solvent or may be used without being diluted with a solvent.

As mentioned above, an important point in the production method of the above-described copolymer resides in the use of 1,3,7-octatriene having a total content of a peroxide and its decomposition product of 0.30 mmol/kg or less (more preferably one as mentioned above).

It is preferred to use compounds each having a high purity for styrene and the aforementioned conjugated diene compound; however, with respect to styrene and the conjugated diene compound, it is sufficient so long as styrene and the conjugated diene compound each have a purity equal to or higher than that of each of styrene and the conjugated diene compound to be used on the occasion of the usual polymerization thereof. In general, the purity of each of styrene and the conjugated diene compound as determined by gas chromatography is preferably 99% or more. In addition thereto, it is more preferred to use, as the conjugated compound, one which does not substantially contain an alkyne, such as acetylene, an alkene, such as ethylene, and a hydrocarbon compound having a functional group, such as a carbonyl group and a hydroxy group.

(Anionic Polymerization Initiator)

The production method of the above-described copolymer utilizes the anionic polymerization, and therefore, an anionic polymerization initiator is used. The anionic polymerization initiator is not limited in terms of its kind so long as it is able to initiate the anionic polymerization.

As the anionic polymerization initiator, an organic alkali metal compound which is generally used in anionic polymerization of an aromatic vinyl compound and a conjugated diene compound can be used. Examples of the organic alkali metal compound include organic lithium compounds, such as methyllithium, ethyllithium, propyllithium, isopropyllithium, butyllithium, sec-butyllithium, tert-butyllithium, isobutyllithium, pentyllithium, hexyllithium, butadienyllithium, cyclohexyllithium, phenyllithium, benzyllithium, p-toluyllithium, styryllithium, trimethylsilyllithium, 1,4-dilithiobutane, 1,5-dilithiopentane, 1,6-dilithiohexane, 1,10-dilithiodecane, 1,1-dilithiodiphenylene, dilithiopolybutadiene, dilithiopolyisoprene, 1,4-dilithiobenzene, 1,2-dilithio-1,2-diphenylethane, 1,4-dilithio-2-ethylcyclohexane, 1,3,5-trilithiobenzene, and 1,3,5-trilithio-2,4,6.triethylbenzene; and organic sodium compounds, such as methylsodium, ethylsodium, n-propylsodium, isopropylsodium, n-butylsodium, sec-butylsodium, tert-butylsodium, isobutylsodium, phenylsodium, sodium naphthalene, and cyclopentadienylsodium. Above all, n-butyllithium and sec-butyllithium are preferred. The organic alkali metal compounds may be used alone or may be used in combination of two or more thereof.

Though the use amount of the anionic polymerization initiator can be properly set according to the desired weight average molecular weight of the living anionic polymer or solid content concentration of the reaction liquid, for example, a molar ratio of the total amount of raw material monomers to the anionic polymerization initiator is preferably 10 to 3,000, more preferably 50 to 2,500, still more preferably 100 to 2,500, yet still more preferably 100 to 2,000, and especially preferably 100 to 1,500 in terms of a molar ratio of the total amount of raw material monomers to the anionic polymerization initiator.

(Lewis Base)

In the production method of the above-described copolymer, from the viewpoint of controlling the polymerization reaction, in particular, from the viewpoint of obtaining a high conversion of 1,3,7-octatriene for a short time, a Lewis base may be used, and it is preferred to use a Lewis base. The Lewis base is not particularly limited in terms of its kind so long as it is an organic compound which does not substantially react with the anionic polymerization initiator and the growing terminal anion.

In the case of using the Lewis base, a molar ratio of the Lewis base to the polymerization initiator (anionic polymerization initiator) to be used for the anionic polymerization [(Lewis base)/(polymerization initiator)] is preferably 0.01 to 1,000, more preferably 0.01 to 400, still more preferably 0.1 to 50, and especially preferably 0.1 to 20. When the foregoing molar ratio falls within this range, a high conversion of 1,3,7-octatriene is readily achieved for a short time.

As the Lewis base, there is exemplified (i) a compound having at least one selected from the group consisting of an ether bond and a tertiary amino group in a molecule thereof [hereinafter referred to as "Lewis base (i)"]. Examples of the Lewis base (i) include (i-1) a compound having one atom having an unshared electron pair [hereinafter referred to as "Lewis base (i-1)] and (i-2) a compound having two or more atoms having an unshared electron pair [hereinafter referred to as "Lewis base (i-2)].

The Lewis base may be one having monodentate properties or may be one having multidentate properties. In addition, the Lewis base may be used alone or may be used in combination of two or more thereof.

(Lewis Base (i)

In the Lewis base (i), specific examples of the Lewis base (i-1) include non-cyclic monoethers, such as dimethyl ether, methyl ethyl ether, diethyl ether, ethyl propyl ether, dipropyl ether, diisopropyl ether, butyl methyl ether, tert-butyl methyl ether, dibutyl ether, dioctyl ether, ethyl phenyl ether, and diphenyl ether; cyclic monoethers having preferably 2 to 40 carbon atoms in total (more preferably 2 to 20 carbon atoms in total), such as tetrahydrofuran and tetrahydropyran; and tertiary monoamines having preferably 3 to 60 carbon atoms in total (more preferably 3 to 15 carbon atoms in total), such as trimethylamine, triethylamine, tripropylamine, triisopropylamine, tributylamine, triisobutylamine, tri-sec-butylamine, tri-tert-butylamine, tri-tert-hexylamine, tri-tert-octylamine, tri-tert-decylamine, tri-tert-dodecylamine, tri-tert-tetradecylamine, tri-tert-hexadecylamine, tri-tert-octadecylamine, tri-tert-tetracosanylamine, tri-tert-octacosanylamine, 1-methyl-1-amino-cyclohexane, tripentylamine, triisopentylamine, trineopentylamine, trihexylamine, triheptylamine, trioctylamine, triphenylamine, tribenzylamine, N,N-dimethylethylamine, N,N-dimethylpropylamine, N,N-dimethylisopropylamine, N,N-dimethylbutylamine, N,N-dimethylisobutylamine, N,N-dimethyl-sec-butylamine, N,N-dimethyl-tert-butylamine, N,N-dimethylpentylamine, N,N-dimethylisopentylamine, N,N-dimethylneopentylamine, N,N-dimethylhexylamine, N,N-dimethylheptylamine, N,N-dimethyloctylamine, N,N-dimethylnonylamine, N,N-dimethyldecylamine, N,N-dimethylundecylamine, N,N-dimethyldodecylamine, N,N-dimethylphenylamine, N,N-dimethylbenzylamine, N,N-diethylmonomethylamine, N,N-dipropylmonomethylamine, N,N-diisopropylmonomethylamine, N,N-dibutylmonomethylamine, N,N-diisobutylmonomethylamine, N,N-di-sec-butylmonomethylamine, N,N-di-tert-butylmonomethylamine, N,N-dipentylmonomethylamine, N,N-diisopentylmonomethylamine, N,N-dineopentylmonomethylamine, N,N-dihexylmonomethylamine, N,N-diheptylmonomethylamine, N,N-dioctylmonomethylamine, N,N-dinonylmonomethylamine, N,N-didecylmonomethylamine, N,N-diundecylmonomethylamine, N,N-didodecylmonomethylamine, N,N-diphenylmonomethylamine, N,N-dibenzylmonomethylamine, N,N-dipropylmonomethylamine, N,N-diisopropylmonoethylamine, N,N-dibutylmonoethylamine, N,N-diisobutylmonoethylamine, N,N-di-sec-butylmonoethylamine, N,N-di-tert-butylmonoethylamine, N,N-dipentylmonoethylamine, N,N-diisopentylmonoethylamine, N,N-dineopentylmonoethylamine, N,N-dihexylmonoethylamine, N,N-diheptylmonoethylamine, N,N-dioctylmonoethylamine, N,N-dinonylmonoethylamine, N,N-didecylmonoethylamine, N,N-diundecylmonoethylamine, N,N-didodecylmonoethylamine, N,N-diphenylmonoethylamine, N,N-dibenzylmonoethylamine, N,N-dimethylaniline, N,N-diethylaniline, N-ethylpiperazine, N-methyl-N-ethylaniline, and N-methylmorpholine.

The Lewis base (i-1) is a Lewis base having monodentate properties to the metal atom of the anionic polymerization initiator.

From the viewpoint of controlling the polymerization reaction, in particular, from the viewpoint of obtaining a high conversion of 1,3,7-octatriene for a short time, diethyl ether, diisopropyl ether, tetrahydrofuran, tetrahydropyran, triethylamine, and N,N-dimethylethylamine are preferred as the Lewis base (i-1).

In the case of using the Lewis base (i-1), a molar ratio of the atom having an unshared electron pair in the Lewis base (i-1) to the metal atom of the polymerization initiator used for the anionic polymerization [(atom having an unshared electron pair)/(metal atom of polymerization initiator)] is preferably 0.01 to 1,000, more preferably 0.1 to 500, still more preferably 2 to 300, especially preferably 2 to 100, and most preferably 2 to 50. When the foregoing molar ratio falls within this range, a high conversion of 1,3,7-octatriene is readily achieved for a short time.

In the Lewis base (i), specific examples of the Lewis base (i-2) include non-cyclic diethers having preferably 4 to 80 carbon atoms in total (more preferably 4 to 40 carbon atoms in total), such as 1,2-dimethoxyethane, 1,2-diethoxyethane, 1,2-diisopropoxyethane, 1,2-dibutoxyethane, 1,2-diphenoxyethane, 1,2-dimethoxypropane, 1,2-diethoxypropane, 1,2-diphenoxypropane, 1,3-dimethoxypropane, 1,3-diethoxypropane, 1,3-diisopropoxypropane, 1,3-dibutoxypropane, and 1,3-diphenoxypropane; cyclic diethers having preferably 4 to 80 carbon atoms in total (more preferably 4 to 40 carbon atoms in total), such as 1,4-dioxane and 2,2-di(tetrahydrofuryl)propane; non-cyclic polyethers having preferably 6 to 40 carbon atoms in total (more preferably 6 to 20 carbon atoms in total), such as diethylene glycol dimethyl ether, dipropylene glycol dimethyl ether, dibutylene glycol dimethyl ether, diethylene glycol diethyl ether, dipropylene glycol diethyl ether, dibutylene glycol diethyl ether, triethylene glycol dimethyl ether, tripropylene glycol dimethyl ether, tributylene glycol dimethyl ether, triethylene glycol diethyl ether, tripropylene glycol diethyl ether, tributylene glycol diethyl ether, tetraethylene glycol dimethyl ether, tetrapropylene glycol dimethyl ether, tetrabutylene glycol dimethyl ether, tetraethylene glycol diethyl ether, tetrapropylene glycol diethyl ether, and tetrabutylene glycol diethyl ether; and polyamines having preferably 6 to 122 carbon atoms in total (more preferably 6 to 32 carbon atoms in total, and still more preferably 6 to 15 carbon atoms in total), such as N,N,N',N'-tetramethylethylenediamine, N, N, N', N' -tetraethylethylene diamine, N,N,N,N",N"-pentamethyldiethylenetriamine, and tris[2-(dimethylamino)ethyl]amine.

The Lewis base (i-2) includes a Lewis base having monodentate properties to the metal atom of the anionic polymerization initiator and a Lewis base having multidentate properties to the metal atom of the anionic polymerization initiator.

From the viewpoint of controlling the polymerization reaction, in particular, from the viewpoint of obtaining a high conversion of 1,3,7-octatriene for a short time, 1,2-dimethoxyethane, 1,2-diethoxyethane, 1,2-diisopropoxyethane, 2,2-di(tetrahydrofuryl)propane, N,N,N',N'-tetramethylethylenediamine, and N,N,N',N'-tetraethylethylenediamine are preferred as the Lewis base (i-2).

In the case of using the Lewis base (i-2), the Lewis base having monodentate properties to the metal atom of the anionic polymerization initiator and the Lewis base having multidentate properties (for example, bidentate properties) to the metal atom of the anionic polymerization initiator are different from each other with respect to a preferred use amount. The Lewis base (i-2) has two or more atoms having an unshared electron pair. In this regard, when attention is paid to two atoms having an unshared electron pair, in the case where the shortest crosslinked carbon number connecting them is 1 (for example, $-O-CH_2-O-$ and $>N-CH_2-N<$) or 3 or more (for example, $-O-C_3H_6-O-$, $>N-C_4H_8-N<$, and $-O-C_3H_6-N<$), each of the atoms tends to have monodentate properties. On the other hand, when attention is similarly paid to two atoms having an unshared electron pair, in the case where the shortest crosslinked carbon number connecting them is 2 (for example, $-O-C_2H_4-O-$ and $>N-C_2H_4-N<$), there is a tendency that the two atoms having those unshared electron pairs are subjected to a multidentate arrangement (bidentate arrangement) to one metal atom of the anionic polymerization initiator.

In the case where the Lewis base (i-2) is a Lewis base having monodentate properties, a molar ratio of the atom having an unshared electron pair in the Lewis base (i-2) to the metal atom of the polymerization initiator to be used for the anionic polymerization [(atom having an unshared electron pair)/(metal atom of polymerization initiator)] is preferably 0.01 to 1,000, more preferably 0.1 to 500, still more preferably 2 to 300, especially preferably 2 to 100, and most preferably 2 to 50. When the foregoing molar ratio falls within this range, a high conversion of 1,3,7-octatriene is readily achieved for a short time.

On the other hand, in the case where the Lewis base (i-2) is a Lewis base having multidentate properties (bidentate properties), a molar ratio of the atom having an unshared electron pair in the Lewis base (i-2) to the metal atom of the polymerization initiator to be used for the anionic polymerization [(atom having an unshared electron pair)/(metal atom of polymerization initiator)] is preferably 0.01 to 50, more preferably 0.1 to 10, still more preferably 0.1 to 5, and especially preferably 0.3 to 4. When the foregoing molar ratio falls within this range, a high conversion of 1,3,7-octatriene is readily achieved for a short time.

In the case of a Lewis base having both monodentate properties and multidentate properties (bidentate properties), it is preferred to determine the use amount of the Lewis base by combing an atom having unshared electron pair having monodentate properties with two or more atoms having unshared electron pair having multidentate properties (bidentate properties), paying attention thereto, and referring to the aforementioned description.

(Solvent)

Though the production method of the above-described copolymer of can be carried out in the absence of a solvent, for the purpose of efficiently removing polymerization heat, it is preferred to carry out the production in the presence of a solvent.

Though the solvent is not particularly limited in terms of its kind so long as it does not substantially react with the anionic polymerization initiator and the growing terminal anion, a hydrocarbon-based solvent is preferred from the viewpoint of precisely controlling the polymerization time and the conversion with the Lewis base.

Examples of the hydrocarbon-based solvent include saturated aliphatic hydrocarbons, such as isopentane (27.9°C; a boiling point at 1 atm, hereinafter the same), pentane (36.1°C), cyclopentane (49.3°C), hexane (68.7°C), cyclohexane (80.7°C), heptane (98.4°C), isoheptane (90°C), isooctane (99°C), 2,2,4-trimethylpentane (99°C), methylcyclohexane (101.1°C), cycloheptane (118.1°C), octane (125.7°C), ethylcyclohexane (132°C), methylcycloheptane (135.8°C), nonane (150.8°C), and decane (174.1°C); and aromatic hydrocarbons, such as benzene (80.1°C), toluene (110.6°C), ethylbenzene (136.2°C), p-xylene (138.4°C), m-xylene (139.1°C), o-xylene (144.4°C), propylbenzene (159.2°C), and butylbenzene (183.4°C).

When a solvent having a boiling point of lower than that of 1,3,7-octatriene (boiling point: 125.5°C) that is one of the raw material monomers is used, the polymerization heat can be efficiently removed by means of reflux condensation cooling of the solvent, and hence, such is preferred. From this viewpoint, isopentane (27.9°C), pentane (36.1°C), cyclopentane (49.3°C), hexane (68.7°C), cyclohexane (80.7°C), heptane (98.4°C), isoheptane (90°C), isooctane (99°C), 2,2,4-trimethylpentane (99°C), methylcyclohexane (101.1°C), cycloheptane (118.1°C), benzene (80.1°C), and toluene (110.6°C) are preferred. Above all, from the same viewpoint, cyclohexane and n-hexane are more preferred.

The solvents may be used alone or may be used in combination of two or more thereof.

Though the use amount of the solvent is not particularly limited, it is regulated such that a solid content concentration of the reaction liquid obtained after completion of the anionic polymerization is preferably 10 to 80% by mass, more preferably 10 to 70% by mass, still more preferably 15 to 65% by mass, especially preferably 15 to 55% by mass, and most preferably 25 to 55% by mass. In addition, it is preferred to regulate the use amount of the solvent such that a concentration of the living anionic polymer in the reaction system is 5% by mass or more, and it is more preferred to regulate the use amount of the solvent such that the concentration of the living anionic polymer is 10 to 80% by mass. When the solvent is used in such an amount, the removal of polymerization heat can be achieved at a level suited for industrial production, and therefore, not only the polymerization time is readily shortened, but also a high conversion of 1,3,7-octatriene is readily achieved. Furthermore, when the solvent is used in such an amount, the molecular weight distribution is readily made narrow.

(Reactor)

A type of a reactor is not particularly limited, a complete mixing type reactor, a tubular reactor, and a reaction apparatus in which two or more of these reactors are connected in series or in parallel can be used. From the viewpoint of producing a copolymer having a narrow molecular weight distribution (Mw/Mn) at a high solution viscosity, it is suitable to use a complete mixing type reactor. Though an impeller of the reactor is not particularly limited, examples thereof include a max blend blade, a full-zone blade, a paddle blade, a propeller blade, a turbine blade, a fan turbine blade, a Pfaudler blade, and a blue margin blade, and a combination of any two or more thereof may also be used. In the case where the viscosity of the obtained polymer solution is high, from the viewpoints of making the molecular weight distribution (Mw/Mn) narrow and promoting the jacket heat removal, it is preferred to use a max blend blade or a full-zone blade.

An agitation method may be either upper portion agitation or lower portion agitation.

A polymerization method is not particularly limited, and it may be carried out by all of batch, semi-batch, and continuous systems. For the purpose of heating and cooling of the solution in the inside of the reactor, the complete mixing type reactor may be provided with a jacket in the outside thereof, and a structure thereof is not particularly limited, and a known system can be adopted. In addition, for the purpose of increasing cooling heat transfer, if desired, a cooling baffle or a cooling coil, etc. may be attached to the inside of the reactor. Furthermore, a direct or indirect type reflux condenser may be attached to a gas phase portion. From the viewpoint of controlling the removal amount of polymerization heat, the reactor may be pressurized with an inert gas, or may be evacuated to atmospheric pressure or lower. In the case of reducing the internal pressure of the reactor to atmospheric pressure or lower, a pump for venting the inert gas may be installed via the reflux condenser. Though a structure of the reflux condenser is not particularly limited, it is preferred to use a multitubular reflux condenser. As for the reflux condenser, plural reflux condensers may be connected in series or in parallel, and a different coolant may be made to pass through each of the reflux condensers. A temperature of the colorant which is made to pass through the reflux condenser is not particularly limited within a range of from a temperature at which the solvent to be refluxed is not frozen to the reaction liquid temperature; however, so long as it is preferably -20 to 50°C, and more preferably 5 to 30°C, a large-sized refrigerating machine is not needed, and hence, such is economical.

(Polymerization Temperature)

Though the polymerization temperature is not particularly limited, it is preferred to carry out the polymerization within a range of from a temperature equal to or higher than the freezing points of the chemicals to a temperature equal to or lower than the temperatures at which the chemicals are not heat-decomposed. So long as the polymerization temperature is preferably -50 to 200°C, more preferably -20 to 120°C, and still more preferably 15 to 100°C, a copolymer having excellent mechanical properties, which is capable of suppressing production of a low-molecular weight polymer to be caused due to partial thermal degradation of the growing terminal anion, can be produced while shortening the polymerization time and keeping the high conversion of 1,3,7-octatriene.

(Polymerization Pressure)

The polymerization of the present invention can be suitably carried out so long as incorporation of a substance which reacts with the growing terminal anion to hinder the polymerization reaction, for example, the air containing oxygen and water, is suppressed.

In the case of using a solvent having a boiling point equal to or lower than the polymerization temperature, the temperature may be controlled by controlling the pressure with an inert gas to control the generation amount of a solvent vapor, or in the case of using a solvent having a boiling point higher than the polymerization temperature, the temperature may be controlled by reducing the pressure in the reaction system by using a vacuum pump to control the generation amount of a vapor of the solvent.

Though the polymerization pressure is not particularly limited, so long as it is 0.01 to 10 MPaG, and more preferably 0.1 to 1 MPaG, not only the use amount of the inert gas is reduced, but also a high pressure-resistant reactor and a pump of venting the inert gas outside the system become unnecessary, and hence, the polymerization can be performed economically advantageously.

(Polymerization Time)

Though the polymerization time is not particularly limited, so long as it is preferably 0.1 to 24 hours, and more preferably 0.5 to 12 hours, a polymer having excellent mechanical properties, which is capable of suppressing production of a low-molecular weight polymer to be caused due to partial thermal degradation of the growing terminal anion, is readily produced.

(Polymerization Terminator and Coupling Agent)

In the production method of the above-described copolymer, it is preferred to add a polymerization terminator to the reaction system, thereby terminating the polymerization reaction. Examples of the polymerization terminator include a hydrogen molecule; an oxygen molecule; water; alcohols, such as methanol, ethanol, propanol, isopropanol, butanol, heptanol, cyclohexanol, phenol, benzyl alcohol, o-cresol, m-cresol, p-cresol, ethylene glycol, propylene glycol, butanediol, glycerin, and catechol; halides, such as methyl chloride, methyl bromide, methyl iodide, ethyl chloride, ethyl bromide, ethyl iodide, butyl chloride, butyl bromide, butyl iodide, benzyl chloride, benzyl bromide, benzyl iodide, trimethylsilyl fluoride, trimethylsilyl chloride, trimethylsilyl bromide, trimethylsilyl iodide, triethylsilyl fluoride, triethylsilyl chloride, triethylsilyl bromide, triethylsilyl iodide, tributylsilyl fluoride, tributylsilyl chloride, tributylsilyl bromide, tributylsilyl iodide, triphenylsilyl fluoride, triphenylsilyl chloride, triphenylsilyl bromide, and triphenylsilyl iodide; ketones, such as 2-heptanone, 4-methyl-2-pentanone, cyclopentanone, 2-hexanone, 2-pentanone, cyclohexanone, 3-pentanone, acetophenone, 2-butanone, and acetone; esters, such as methyl acetate, ethyl acetate, and butyl acetate; epoxy compounds, such as ethylene oxide, propylene oxide, 1,2-butylene oxide, 2,3-butylene oxide, styrene oxide, and cyclohexene oxide; and silyl hydride compounds, such as methyldichlorosilane, ethyldichlorosilane, propyldichlorosilane, butyldichlorosilane, pentyldichlorosilane, hexyldichlorosilane, heptyldichlorosilane, octyldichlorosilane, nonyldichlorosilane, decyldichlorosilane, phenyldichlorosilane, dimethylchlorosilane, diethylchlorosilane, dipropylchlorosilane, dibutylchlorosilane, dipentylchlorosilane, dihexylchlorosilane, diheptylchlorosilane, dioctylchlorosilane, dinonylchlorosilane, didecylchlorosilane, methylpropylchlorosilane, methylhexylchlorosilane, methylphenylchlorosilane, diphenylchlorosilane, dimethylmethoxysilane, dimethylethoxysilane, dimethylpropoxysilane, dimethylbutoxysilane, dimethylphenoxysilane, dimethylbenzyloxysilane, diethylmethoxysilane, diethylethoxysilane, diethylpropoxysilane, diethylbutoxysilane, diethylphenoxysilane, diethylbenzyloxysilane, dipropylmethoxysilane, dipropylethoxysilane, dipropylpropoxysilane, dipropylbutoxysilane, dipropylphenoxysilane, dipropylbenzyloxysilane, dibutylmethoxysilane, dibutylethoxysilane, dibutylpropoxysilane, dibutylbutoxysilane, dibutylphenoxysilane, dibutylbenzyloxysilane, diphenylmethoxysilane, diphenylethoxysilane, diphenylpropoxysilane, diphenylbutoxysilane, diphenylphenoxysilane, diphenylbenzyloxysilane, dimethylsilane, diethylsilane, dipropylsilane, dibutylsilane, diphenylsilane, diphenylmethylsilane, diphenylethylsilane, diphenylpropylsilane, diphenylbutylsilane, trimethylsilane, triethylsilane, tripropylsilane, tributylsilane, triphenylsilane, methylsilane, ethylsilane, propylsilane, butylsilane, phenylsilane, methyldiacetoxysilane, polymethylhydrosiloxane, polyethylhydrosiloxane, polypropylhydrosiloxane, polybutylhydrosiloxane, polypentylhydrosiloxane, polyhexylhydrosiloxane, polyheptylhydrosiloxane, polyoctylhydrosiloxane, polynonylhydrosiloxane, polydecylhydrosiloxane, polyphenylhydrosiloxane, 1,1,3,3-tetramethyldisiloxane, methylhydrocyclosiloxane, ethylhydrocyclosiloxane, propylhydrocyclosiloxane, butylhydrocyclosiloxane, phenylhydrocyclosiloxane, 1,1,3,3-tetramethyldisilazane, 1,1,3,3-tetraethyldisilazane, 1,1, 3, 3-tetrapropyldisilazane, 1,1,3,3-tetrabutyldisilazane, and 1,1,3,3-tetraphenyldisilazane.

The polymerization terminators may be used alone or may be used in combination of two or more thereof.

The polymerization terminator may be used upon being diluted with a solvent which can be used for the polymerization reaction. Though the use amount of the polymerization terminator is not particularly limited, the matter that the use amount of the polymerization terminator does not become excessive relative to the growing terminal anion is preferred from the viewpoint of recovering and reusing the solvent, and in the case of hydrogenating the copolymer, such is also preferred from the standpoint that the use amount of a hydrogenation catalyst can be reduced.

A conversion of the 1,3,7-octatriene after completion of the anionic polymerization, as determined by gas chromatography, is preferably 80.0% or more, more preferably 90.0% or more, still more preferably 95.0% or more, especially preferably 97.0% or more, and most preferably 98.0% or more.

(Hydrogenation Reaction)

From the viewpoints of heat resistance, oxidation resistance, weather resistance, ozone resistance, etc. of the copolymer, at least a part or the whole of carbon-carbon double bonds which the copolymer has may be hydrogenated. Typically, in the production method of the copolymer, to the polymer solution obtained by polymerization termination or the polymer solution optionally diluted with the aforementioned solvent, a hydrogenation catalyst is added to act on hydrogen, a hydride of the copolymer can be produced.

Examples of the hydrogenation catalyst include Raney nickel; a heterogeneous catalyst in which a metal, such as Pt, Pd, Ru, Rh, and Ni, is supported on a carrier, such as carbon, alumina, and diatomaceous earth; a Ziegler-type catalyst composed of a combination of a transition metal compound with an alkylaluminum compound, an alkyllithium compound, or the like; and a metallocene-based catalyst.

A temperature of the hydrogenation reaction is preferably -20 to 250°C, the temperature of which is equal to or higher than the freezing point of the solvent and not higher than the heat decomposition temperature of the copolymer, and it is more preferably 30 to 150°C from the viewpoint of industrially advantageously producing the hydride of the copolymer. When the hydrogenation reaction temperature is 30°C or higher, the hydrogenation reaction is advanced, and when it is 150°C or lower, even if heat decomposition of the hydrogenation catalyst occurs, the hydrogenation reaction can be carried out at a low use amount of the hydrogenation catalyst. The hydrogenation reaction temperature is still more preferably 60 to 100°C from the viewpoint of reducing the use amount of the hydrogenation catalyst.

The hydrogen can be used in a gaseous form, and its pressure is not particularly limited so long as it is atmospheric pressure or higher; however, it is preferably 0.1 to 20 MPaG from the viewpoint of industrially advantageously producing a hydride of the copolymer. When the pressure is 20 MPaG or lower, even if hydrogen decomposition of the hydrogenation catalyst occurs, the hydrogenation reaction can be carried out at a low use amount of the hydrogenation catalyst. The pressure of hydrogen is still more preferably 0.5 to 10 MPaG from the viewpoint of reducing the use amount of the hydrogenation catalyst.

Though the time required for the hydrogenation reaction can be properly selected according to a condition, it is preferably a range of from 10 minutes to 24 hours since commencement of co-presence of the catalyst from the viewpoint of industrially advantageously producing a hydride of the copolymer.

As for the reaction mixed liquid after completion of the hydrogenation reaction, after being optionally diluted with the aforementioned solvent or concentrated, it is washed with a basic aqueous solution or an acidic aqueous solution, whereby the hydrogenation catalyst can be removed.

As for the polymer solution obtained after the polymerization reaction or the polymer solution obtained after the hydrogenation reaction, after subjecting to a concentration operation, the resultant may be fed into an extruder, thereby isolating the copolymer; it may be brought into contact with steam to remove the solvent and so on, thereby isolating the copolymer; or it may be brought into contact with an inert gas in a heated state to remove the solvent and so on, thereby isolating the copolymer.

(Production Method of 1,3,7-Octatriene)

The production method of 1,3,7-octatriene is not particularly limited so long as the total content of the peroxide and its decomposition product in 1,3,7-octatriene is 0.30 mmol/kg. For example, a method of dimerizing butadiene in the presence of a palladium catalyst, as described in JP 46-24003 B; and deacetylation reaction of 1-acetoxy-2,7-octadiene as described in JP 47-17703 A can be utilized. In the case where the total content of a peroxide and its decomposition product in 1,3,7-octatriene is more than 0.30 mmol/kg, it is necessary to use 1,3,7-octatriene after reducing the contents of the peroxide and its decomposition product. Though a method of reducing the contents of the peroxide and its decomposition product is not particularly limited, examples thereof include an alumina treatment; and a method in which a compound having a function as an antioxidant and having a higher boiling point than that of 1,3,7-octatriene (for example, 4-tert-butyl catechol, 2,4-di-tert-butylphenol, and triphenyl phosphine) is mixed with 1,3,7-octatriene, followed by performing a distillation treatment. Above all, it is preferred to utilize an alumina treatment.

On the occasion of producing 1,3,7-octatriene, it is known that 1,3,6-octatriene, 2,4,6-octatriene, or the like, in which the position of a double bond is different, is formed as a by-product. Owing to the matter that a boiling point of such a by-product is close to the boiling point of 1,3,7-octatriene, it is difficult to undergo distillation separation of the by-product from 1,3,7-octatriene, and therefore, it is preferred to adopt the production method of 1,3,7-octatriene, in which the by-product is a few. From that viewpoint, as mentioned above, it is preferred to produce 1,3,7-octatriene having a purity, as determined by gas chromatography, of more than 98.0%.

Examples

The production of 1,3,7-octatriene was carried out in an inert gas atmosphere of nitrogen, argon, or the like, without being particularly indicated.

As for all of liquid medicines, those obtained by not only substituting a dissolved gas with an inert gas but also removing an antioxidant and water were used unless otherwise indicated.

As 2,7-octadien-1-ol that is a production raw material of 1,3,7-octatriene, 2,7-octadien-1-ol having a purity of 99.54%, as manufactured by Kuraray Co., Ltd., was used. The foregoing purity was determined according to the following measurement method.

(Measurement Method of Purity of 2,7-Octadien-1-ol)

The purity of 2,7-octadien-1-ol was determined by means of an analysis of gas chromatography under the following measurement condition. Specifically, a percentage of a "peak area capable of assigning to one 2,7-octadien-1-ol capable of being observed for a retention time of about 17.6 minutes" relative to "sum total of peak areas detected for a retention time of 5 to 20 minutes" was determined, and this was defined as the purity of 2,7-octadien-1-ol. The purity of 2,7-octadien-1-ol was found to be 99.54%.

<Measurement Condition of Gas Chromatography>

   Apparatus: "GC-2010 Plus", manufactured by Shimadzu Corporation
   Column: "Rxi-5ms" (inside diameter: 0.25 mm, length: 30 m, film thickness: 1 $\mu$m), manufactured by Restek Corporation
   Carrier gas: Helium (113.7 kPaG) was allowed to flow at a flow rate of 1.37 mL/min.
   Injection amount of sample: 0.1 $\mu$L of the liquid medicine was injected at a split ratio of 100/1.
   Detector: FID
   Temperature of detector: 280°C
   Temperature of vaporization chamber: 280°C
   Temperature rise condition: After holding at 70°C for 12 minutes, the temperature was raised to 280°C at a rate of 20°C/min, followed by holding for 5 minutes.

[Production Example 1] Production of 1,3,7-octatriene

(Acetylation Reaction of 2,7-Octadiene-1-ol)

A flask having a capacity of 10 L and equipped with a thermometer, a nitrogen feed inlet, a dropping funnel having a capacity of 2 L, and a stirrer was prepared. After purging the interior of the flask with nitrogen, 1,500.8 g (11.892 mol) of 2,7-octadien-1-ol, 1,806.3 g (17.851 mol) of triethylamine, and 72.60 g (0.594 mol) of 4-dimethylaminopyridine were successively charged, and then, the contents were cooled by using a dry ice-acetone bath while stirring at 140 rpm until the liquid temperature reached -40°C, thereby obtaining a mixed liquid. Meanwhile, 1,821.5 g (17.842 mol) of acetic anhydride was charged in the dropping funnel, and the acetic anhydride was added dropwise over 1 hour such that the liquid temperature of the aforementioned mixed liquid was kept at -50 to -30°C.

After completion of the dropwise addition, the reaction was continued for 1 hour, and 700.0 g of distilled water was added to terminate the reaction. The organic phase was recovered and then successively washed with 1 L of a 5% hydrochloric acid two times, 1 L of a saturated sodium hydrogencarbonate aqueous solution two times, 1 L of distilled water one time, and 1 L of a saturated sodium chloride aqueous solution one time. The thus obtained organic phase was dehydrated by the addition of 170 g of anhydrous sodium sulfate, and the anhydrous sodium sulfate was then filtered off, to recover the organic phase.

The recovered organic phase was analyzed by means of gas chromatography under the same condition as in the aforementioned purity analysis of 2,7-octadien-1-ol, to calculate a purity of 1-acetoxy-2,7-octadiene. A percentage of a "sum total of two peak areas capable of being observed for a retention time of about 19.2 minutes and about 19.3 minutes, respectively" relative to a "sum total of peak areas detected for a retention time of 5 to 20 minutes", namely the purity of 1-acetoxy-2,7-octadiene was found to be 99.51%. 1,851.1 g (yield: 92.5%) of 1-acetoxy-2,7-octadiene having the foregoing purity was acquired.

(Deacetylation Reaction of 1-Acetoxy-2,7-octadiene)

An interior of a 3-L vacuum distillation apparatus equipped with a Claisen tube distillation head connected with a receiver via a Liebig condenser, a stirrer, and a thermometer was purged with nitrogen, and 1,205.7 g (7.167 mol) of the above-obtained 1-acetoxy-2,7-octadiene, 26.7 g (0.119 mol) of palladium acetate, and 124.8 g (0.4758 mol) of triphenyl phosphine were charged. An internal pressure was controlled to 1.52 to 1.35 kPaA with a vacuum controller while stirring at 200 rpm, and distillation was performed at a rate of 8.0 g/min while heating such that the liquid temperature was 90°C. After removing 41.4 g of an initial distillate, 799.7 g of a subsequently distillated product was recovered.

The recovered distillate was successively washed with 500 mL of a 0.2 mol/L sodium hydroxide aqueous solution three times, 500 mL of distilled water one time, and 500 mL of a saturated sodium chloride aqueous solution one time. The organic phase was dried by the addition of 50 g of anhydrous sodium sulfate, and the anhydrous sodium sulfate was then filtered off, to recover the organic layer.

The recovered organic phase was analyzed by means of gas chromatography under the same condition as in the aforementioned purity analysis of 2,7-octadien-1-ol, and as a result, it was found to be a mixture composed of 46.9% of 1,3,7-octatriene, 23.7% of 1-acetoxy-2,7-octadiene, and 29.4% of 3-acetoxy-1,7-octadiene. 637.0 g of the organic layer was charged in a distillation apparatus having a McMahon packing filled therein and having an inside diameter of 25.4 mm and a height of 240 mm. A distillate was recovered under a condition at 22.1 to 13.0 kPaA such that a reflux ratio was 2 at 79.1 to 60.3°C.

The recovered organic phase was analyzed by means of gas chromatography under the same condition as in the aforementioned purity analysis of 2,7-octadien-1-ol, to calculate a purity of 1,3,7-octatriene. A percentage of a "sum of two peak areas capable of being assigned to 1,3,7-octatriene and observed for a retention time of near 8.7 minutes and 9.0 minutes, respectively" relative to a "sum total of peak areas capable of being assigned to all of the octatrienes and detected for a retention time of 5 to 20 minutes" was calculated according to the following numerical formula 1, and as a result, it was found to be 99.3%. Here, all of the octatrienes mean all of 1,3,7-octatriene and double-bond isomers, such as 1,3,6-octatriene, 2,4,6-octatriene, and 1,4,6-octatriene.

$$\text{Purity (\%)} = \frac{\text{Peak area of 1,3,7-octatriene}}{\text{Sum total of peak areas of all of octatrienes}} \times 100 \quad \text{(Numerical formula 1)}$$

A total content of the peroxide and its decomposition product in the above-obtained 1,3,7-octatriene was measured according to the following measurement method.

(Measurement Method of Total Content of Peroxide and Its Decomposition Product)

After purging a 100-mL three-necked flask equipped with a gas feed port and a condenser with nitrogen, 5.00 g of 1,3,7-octatriene obtained by the aforementioned method was precisely weighed, 20.0 g of isopropyl alcohol, 5.0 g of distilled water, 2.0 g of acetic acid, and 1.6 g of potassium iodide dissolved in 1.5 g of distilled water were added, and then, the contents were heated and stirred for 5 minutes by using an oil bath at 95°C.

After taking out the three-necked flask from the oil bath, the interior of the condenser was washed with a mixed solvent of 6.0 g of isopropyl alcohol and 1.5 g of distilled water, and the washing liquid was mixed with the solution in the three-necked flask. After allowing to stand for cooling to room temperature, 0.005 mmol/mL of a sodium thiosulfate aqueous solution was added dropwise to the three-necked flask, and the total content of a peroxide and its decomposition product was calculated from a volume at which the color was faded from yellow to colorless according to the following numerical formula 2. As a result, the total content of the peroxide and its decomposition product in 1,3,7-octatriene was found to be less than 0.015 mmol/kg.

$$\text{Total content of peroxide and its decomposition product (mmol/kg)} = \frac{0.005\ (\text{mmol/mL}) \times [\text{Dropwise addition amount of sodium thiosulfate (mL)}]}{2 \times 0.005\ (\text{kg})} \quad \text{(Numerical formula 2)}$$

There was thus obtained 1,3,7-octatriene having a purity of 99.3% and having a total content of the peroxide and its decomposition product of less than 0.015 mmol/kg. The results are shown in Table 1.

[Production Example 2] Production of 1,3,7-Octatriene

The same operations as in Production Example 1 were followed, except that the distillation rate of 1,3,7-octatriene from the reaction system was changed to 6.0 g/min such that the purity of 1,3,7-octatriene was one as shown in Table 1. However, 10% by mass of neutral active alumina was added to the 1,3,7-octatriene having been distilled and purified, followed by storing for 20 hours in a nitrogen atmosphere. The purity of the obtained 1,3,7-octatriene and the total content of the peroxide and its decomposition product are shown in Table 1.

[Production Example 3] Production of 1,3,7-Octatriene

The same operations as in Production Example 1 were followed, except that the distillation rate of 1,3,7-octatriene from the reaction system was changed to 5.0 g/min such that the purity of 1,3,7-octatriene was one as shown in Table 1. However, 10% by mass of neutral active alumina was added to the 1,3,7-octatriene having been distilled and purified, followed by storing for 20 hours in a nitrogen atmosphere. The purity of the obtained 1,3,7-octatriene and the total content of the peroxide and its decomposition product are shown in Table 1.

[Production Example 4] Production of 1,3,7-Octatriene

The same operations as in Production Example 1 were followed, except that the distillation rate of 1,3,7-octatriene from the reaction system was changed to 2.0 g/min such that the purity of 1,3,7-octatriene was one as shown in Table 1. However, 10% by mass of neutral active alumina was added to the 1,3,7-octatriene having been distilled and purified, followed by storing for 20 hours in a nitrogen atmosphere. The purity of the obtained 1,3,7-octatriene and the total content of the peroxide and its decomposition product are shown in Table 1.

[Production Example 5] Production of 1,3,7-Octatriene (for Reference Example 1)

The 1,3,7-octatriene acquired in Production Example 1 was transferred into a glass flask and put into cold storage for 2,000 hours in an air atmosphere. The purity of the obtained 1,3,7-octatriene and the total content of the peroxide and its decomposition product are shown in Table 1.

Table 1

| 1,3,7-Octatriene | Production Example | | | | |
|---|---|---|---|---|---|
| | 1 | 2 | 3 | 4 | 5 |
| Purity (%) | 99.3 | 98.2 | 97.4 | 91.1 | 99.3 |
| Total content of peroxide and its decomposition product (mmol/kg) | <0.015 | <0.015 | <0.015 | <0.015 | 3.3 |

Hereinafter, the production of a copolymer was carried out in an argon gas atmosphere unless otherwise indicated.

As reagents used in each of the Examples, the following were used.

As for styrene, styrene (containing a stabilizer), manufactured by Wako Pure Chemical Industries, Ltd., from which moisture and the stabilizer had been removed by using Molecular Sieves 3A and neutral active alumina and further subjected to bubbling with an argon gas to purge the dissolved gas, was used.

As for butadiene, butadiene (containing a stabilizer), manufactured by JSR Corporation, from which moisture and the stabilizer had been removed by using Molecular Sieves 3A and neutral active alumina and further subjected to bubbling with an argon gas to purge the dissolved gas, was used.

As for isoprene, isoprene (containing a stabilizer), manufactured by Wako Pure Chemical Industries, Ltd., from which moisture and the stabilizer had been removed by using Molecular Sieves 3A and neutral active alumina and further subjected to bubbling with an argon gas to purge the dissolved gas, was used.

As for cyclohexane, cyclohexane (not containing a stabilizer), manufactured by Wako Pure Chemical Industries, Ltd., from which moisture had been removed by using Molecular Sieves 3A and further subjected to bubbling with an argon gas to purge the dissolved gas, was used.

As for sec-butyllithium, a cyclohexane solution of sec-butyllithium, manufactured by Asia Lithium Corporation, a concentration of which had been adjusted with the aforementioned cyclohexane to 1.26 mmol/g, was used.

All of tetrahydrofuran (not containing a stabilizer), diethyl ether (containing a stabilizer), triethylamine, 1,2-diethoxyethane (DEE), and N,N,N',N'-tetramethylethylenediamine (TMEDA), all of which are manufactured by Wako Pure Chemical Industries, Ltd., and 2,2-di(2-tetrahydrofuryl)propane (DTHFP), manufactured by Tokyo Chemical Industry Co., Ltd., from which moisture and the stabilizer had been removed by using neutral active alumina and further subjected to bubbling with an argon gas to purge the dissolved gas, were used.

As for polystyrene, standard polystyrene (weight average molecular weight (Mw) = 1,300, molecular weight distribution (Mw/Mn) = 1.06), manufactured by Wako Pure Chemical Industries, Ltd. was used.

In each of the following Examples, with respect to the conversion of each of 1,3,7-octatriene, styrene, butadiene, and isoprene, the yield, weight average molecular weight (Mw), and molecular weight distribution (Mw/Mn) of the copolymer, and the binding mode were determined according to the following measurement methods, respectively.

(Measurement Method of Conversion)

1.00 g of ethylene glycol dimethyl ether was added to 5.00 g of the polymerization-terminated liquid obtained after completion of the polymerization reaction, and this mixed liquid was analyzed by means of gas chromatography under the following measurement condition.

The conversion (%) of 1,3,7-octatriene was calculated from a "relative area ratio of 1,3,7-octatriene and ethylene glycol dimethyl ether at 0 hour of commencement of polymerization reaction" and a "relative area ratio of unreacted 1,3,7-octatriene and ethylene glycol dimethyl ether after completion of polymerization reaction" according to the following numerical formula 3.

The conversion (%) of styrene was calculated from a "relative area ratio of styrene and ethylene glycol dimethyl ether before reaction at 0 hour of commencement of polymerization reaction" and a "relative area ratio of unreacted styrene and ethylene glycol dimethyl ether after reaction" according to the following numerical formula 4.

The conversion (%) of butadiene was calculated from a "relative area ratio of butadiene and ethylene glycol dimethyl ether before reaction at 0 hour of commencement of polymerization reaction" and a "relative area ratio of unreacted butadiene and ethylene glycol dimethyl ether after reaction" according to the following numerical formula 5.

Furthermore, the conversion (%) of isoprene was calculated from a "relative area ratio of isoprene and ethylene glycol dimethyl ether before reaction at 0 hour of commencement of polymerization reaction" and a "relative area ratio of unreacted isoprene and ethylene glycol dimethyl ether after reaction" according to the following numerical formula 6.

<Measurement Condition of Gas Chromatography>

Apparatus: "GC-14B", manufactured by Shimadzu Corporation
Column: "Rxi-5ms" (inside diameter: 0.25 mm, length: 30 m, film thickness: 0.25 μm), manufactured by Restek Corporation
Carrier gas: Helium (140.0 kPaG) was allowed to flow at a flow rate of 1.50 mL/min.
Injection amount of sample: 0.1 μL of the liquid medicine was injected at a split ratio of 50/1.
Detector: FID
Temperature of detector: 280°C
Temperature of vaporization chamber: 280°C
Temperature rise condition: After holding at 40°C for 10 minutes, the temperature was raised to 250°C at a rate of 20°C/min, followed by holding for 5 minutes.

$$\text{Conversion (\%)} = \left[ 1 - \frac{\text{Relative area ratio of 1,3,7-octatriene after completion of polymerization reaction}}{\text{Relative area ratio of 1,3,7-octatriene at 0 hour of commencement of polymerization reaction}} \right] \times 100 \quad \text{(Numerical formula 3)}$$

$$\text{Conversion (\%)} = \left[ 1 - \frac{\text{Relative area ratio of styrene after completion of polymerization reaction}}{\text{Relative area ratio of styrene at 0 hour of commencement of polymerization reaction}} \right] \times 100 \quad \text{(Numerical formula 4)}$$

$$\text{Conversion (\%)} = \left[ 1 - \frac{\text{Relative area ratio of butadiene after completion of polymerization reaction}}{\text{Relative area ratio of butadiene at 0 hour of commencement of polymerization reaction}} \right] \times 100 \quad \text{(Numerical formula 5)}$$

$$\text{Conversion (\%)} = \left[ 1 - \frac{\text{Relative area ratio of isoprene after completion of polymerization reaction}}{\text{Relative area ratio of isoprene at 0 hour of commencement of polymerization reaction}} \right] \times 100 \quad \text{(Numerical formula 6)}$$

(Measurement Method of Yield of Copolymer)

The yield of the obtained copolymer was determined on a basis of the charged amount of the raw material monomers according to the following numerical formula 7.

$$\text{Yield (\%)} = \frac{\text{Mass of obtained copolymer (g)}}{\text{Mass of raw material monomers used for polymerization reaction (g)}} \times 100 \quad \text{(Numerical formula 7)}$$

(Measurement Method of Weight Average Molecular Weight (Mw) and Molecular Weight Distribution (Mw/Mn))

To 0.10 g of the obtained copolymer, 60.0 g of tetrahydrofuran was added to prepare a uniform solution; this solution was analyzed by means of gel permeation chromatography under the following measurement condition, to determine the weight average molecular weight (Mw) and the number average molecular weight (Mn) as expressed in terms of standard polystyrene; and the molecular weight distribution (Mw/Mn) was calculated.

18

<Measurement Condition of Gel Permeation Chromatography>

Apparatus: "HLC-8320GPC EcoSEC", manufactured by Tosoh Corporation
Column; Two of "TSKgel SuperMultipore HZ-M" (inside diameter: 4.6 mm, length: 150 mm), manufactured by Tosoh Corporation were connected in series and used.
Eluent: Tetrahydrofuran was allowed to flow at a flow rate of 0.35 mL/min.
Injection amount of sample: 10 $\mu$L
Detector: RI
Temperature of detector: 40°C

(Binding Mode)

To 150 mg of the obtained copolymer, 1.00 g of deuterochloroform was added to prepare a uniform solution, and this solution was subjected to $^{13}$C-NMR measurement under the following measurement condition.

<$^{13}$C-NMR Measurement Condition>

Apparatus: "JNM-LA500", manufactured by JEOL Ltd.
Reference material: Tetramethylsilane
Measurement temperature: 25°C
Cumulative number: 15,000 times

As a result of the $^{13}$C-NMR measurement, a "peak capable of being assigned to one carbon atom of the 1,2-bond" of 1,3,7-octatriene was observed at $\delta$138.1 to 138.6 ppm. This peak area is abbreviated as "area a". "Peaks capable of being assigned to one carbon atom of the 1,2-bond and one carbon atom of the 1,4-bond" were observed at $\delta$126.9 to 132.6 ppm. This peak area is abbreviated as "area b". "Peaks capable of being assigned to one carbon atom of the 1,4-bond and one carbon atom of the 3,4-bond" were observed at $\delta$138.8 to 139.4 ppm. This peak area is abbreviated as "area c". A "peak capable of being assigned to one carbon atom of the 3,4-bond" was observed at $\delta$140.9 to 141.6 ppm. This peak area is abbreviated as "area d".

A "peak capable of being assigned to one carbon atom of the 1,2-bond" of butadiene was observed at $\delta$142.2 to 143.7 ppm. This peak area is abbreviated as "area e". "Peaks capable of being assigned to two carbon atoms of the 1,4-bond" were observed at $\delta$126.9 to 132.0 ppm. This peak area is abbreviated as "area f".

A "peak capable of being assigned to one carbon atom of the 1,2-bond" of isoprene was observed at 8140.5 to 141.0 ppm. This peak area is abbreviated as "area g". A "peak capable of being assigned to one carbon atom of the 1,4-bond" was observed at $\delta$122.0 to 126.9 ppm. This peak area is abbreviated as "area h". A "peak capable of being assigned to one carbon atom of the 3,4-bond" was observed at $\delta$110.2 to 112.2 ppm. This peak area is abbreviated as "area i". A "peak capable of being assigned to one carbon atom of the 3,4-bond" was observed at $\delta$145.5 to 150.3 ppm. This peak area is abbreviated as "area j".

A "peak capable of being assigned to one carbon atom" of styrene was observed at $\delta$125.1 to 126.2 ppm. This peak area is abbreviated as "area k". "Peaks capable of being assigned to four carbon atoms" were observed at $\delta$126.9 to 129.0 ppm. This peak area is abbreviated as "area 1". A "peak capable of being assigned to one carbon atom" was observed at $\delta$144.7 to 146.5 ppm. This peak area is abbreviated as "area m".

The peak area corresponding to one carbon atom of the 1,2-bond of 1,3,7-octatriene is the "area a"; the peak area corresponding to one carbon atom of the 1,4-bond is "(area c) - (area d)"; and the peak area corresponding to one carbon atom of the 3,4-bond is the "area d".

The peak area corresponding to one carbon atom of the 1,2-bond of butadiene is the "area e"; and the peak area corresponding to one carbon atom of the 1,4-bond is "[(area b) + (area f) + (area l) - {(area a) + (area c) - (area d)} - 4 $\times$ {(area J) + (area m) - (area i)}]/2".

The peak area corresponding to one carbon atom of the 1,2-bond of isoprene is the "area g"; the peak area corresponding to one carbon atom of the 1,4-bond is "{(area h) + (area k) -{(area j) + (area m) - (area i)}"; and the peak area corresponding to one carbon atom of the 3,4-bond is the "area i".

The peak area corresponding to one carbon atom of styrene is "{(area m) + (area j) - (area i)}".

A ratio of each of the 1,2-bond, the 1,4-bond, and the 3,4-bond derived from 1,3,7-octatriene contained in the copolymer, a ratio of each of the 1,2-bond and the 1,4-bond derived from butadiene, and a ratio of each of the 1,2-bond,

the 1,4-bond, and the 3,4-bond derived from isoprene were determined according to the following numerical formulae 8 to 10, respectively.

$$\text{Ratio of the 1,2-bond (\%)} = \frac{\text{Peak area assigned to the 1,2-bond}}{\text{Sum total of peak areas assigned to the 1,2-bond, the 1,4-bond, and the 3,4-bond}} \times 100 \quad \text{(Numerical formula 8)}$$

$$\text{Ratio of the 1,4-bond (\%)} = \frac{\text{Peak area assigned to the 1,4-bond}}{\text{Sum total of peak areas assigned to the 1,2-bond, the 1,4-bond, and the 3,4-bond}} \times 100 \quad \text{(Numerical formula 9)}$$

$$\text{Ratio of the 3,4-bond (\%)} = \frac{\text{Peak area assigned to the 3,4-bond}}{\text{Sum total of peak areas assigned to the 1,2-bond, the 1,4-bond, and the 3,4-bond}} \times 100 \quad \text{(Numerical formula 10)}$$

[Example 1] Production of Random Copolymer

The interior of an SUS316 (registered trademark)-made autoclave having a capacity of 1 L and equipped with a thermometer, an electric heater, an electromagnetic induction agitator, a liquid medicine charging port, and a sampling port was purged with argon, and then, 293.5 g of cyclohexane was charged. Subsequently, the internal pressure was regulated with argon to 0.1 MPaG, and then, the temperature was raised to 50°C over 30 minutes while stirring at 250 rpm. 0.370 g (5.14 mmol) of tetrahydrofuran (THF) was charged in an argon gas stream, subsequently, 0.82 g of a cyclohexane solution containing 1.260 mmol/g of sec-butyllithium (1.03 mmol in terms of sec-butyllithium) was charged, and then, the internal pressure was regulated with argon to 0.3 MPaG.

Meanwhile, 80.16 g (0.741 mol) of 1,3,7-octatriene obtained in Production Example 1 and 115.71 g (1.111 mol) of styrene were mixed, and then, the mixture was fed into the autoclave having sec-butyllithium resided therein over 1 hour (corresponding to the "Feed time of raw material monomers" in Table 2). The point of time when the charging was commenced was defined as 0 hour of commencement of the polymerization reaction, and the reaction was performed for 2 hours (corresponding to the "Polymerization time including the feed time of raw material monomers" in Table 2) while controlling the liquid temperature to 50°C.

Thereafter, 0.412 g of a cyclohexane solution containing 2.50 mmol/g of ethanol (1.03 mmol in terms of ethanol) was added, thereby terminating the polymerization reaction.

Subsequently, the whole amount of the obtained polymerization-terminated liquid was transferred into a 3-L eggplant type flask, and almost of all of the solvent was distilled off while heating at 40°C and at 100 kPaA by using a rotatory evaporator. Furthermore, the aforementioned eggplant type flask was transferred into a vacuum dryer and dried for 12 hours while heating at 25°C and at 0.1 kPaA, thereby acquiring 191.2 g of a copolymer in a solid state. The use amount of each of the reagents, the reaction condition, and the reaction results are shown in Table 2.

[Examples 2 to 24 and 26, of which Examples 7, 10, 14, 22 and 24 are Reference Examples] Production of Random Copolymers

Copolymers were obtained by performing the polymerization reaction in the same manner as in Example 1, except that each of the reagents and the use amount thereof and the reaction condition were changed to those as shown in Table 2 or 3. The polymerization time was one described in Table 2 or 3. The use amount of each of the reagents, the reaction condition, and the reaction results are shown in Tables 2 and 3

[Example 25]

A copolymer was obtained by performing the polymerization reaction in the same manner as in Example 1, except for changing each of the reagents and the use amount thereof and the reaction condition as shown in Table 3 and further using the 1,3,7-octatriene obtained in Production Example 2 in places of the 1,3,7-octatriene obtained in Production Example 1. The polymerization time was one shown in Table 3. The use amount of each of the reagents, the reaction condition, and the reaction results are shown in Table 3.

[Example 27]

A copolymer was obtained by performing the polymerization reaction in the same manner as in Example 1, except for changing each of the reagents and the use amount thereof and the reaction condition as shown in Table 3 and further using the 1,3,7-octatriene obtained in Production Example 3 in places of the 1,3,7-octatriene obtained in Production Example 1. The polymerization time was one shown in Table 3. The use amount of each of the reagents, the reaction condition, and the reaction results are shown in Table 3.

[Example 28]

A copolymer was obtained by performing the polymerization reaction in the same manner as in Example 1, except for changing each of the reagents and the use amount thereof and the reaction condition as shown in Table 3 and further using the 1,3,7-octatriene obtained in Production Example 4 in places of the 1,3,7-octatriene obtained in Production Example 1. The polymerization time was one shown in Table 3. The use amount of each of the reagents, the reaction condition, and the reaction results are shown in Table 3.

[Example 29(1)]

A copolymer having a living anionic active species at a molecular end thereof was obtained by performing the reaction in the same manner as in Example 1, except that the use amount of each of the reagents was changed to one as shown in Table 3, thereby regulating a solid content concentration of the reaction liquid after completion of the anionic polymerization to 40% by mass. The use amount of each of the reagents, the reaction condition, and the reaction results are shown in Table 3.

[Example 29(2)]

To the autoclave containing the copolymer having a living anionic active species as obtained in Example 29(1), a mixture of 27.8 g (0.257 mol) of the 1,3,7-octatriene obtained in Production Example 1 and 41.4 g (0.397 mol) of styrene was added, and the contents were allowed to react with each other, thereby obtaining a copolymer. The use amount of each of the reagents, the reaction condition, and the reaction results are shown in Table 3.

[Reference Example 1]

A copolymer was obtained by performing the polymerization reaction in the same manner as in Example 1, except for changing each of the reagents and the use amount thereof and the reaction condition as shown in Table 3 and further using the 1,3,7-octatriene obtained in Production Example 5 in places of the 1,3,7-octatriene obtained in Production Example 1. The polymerization time was one shown in Table 3. The use amount of each of the reagents, the reaction condition, and the reaction results are shown in Table 3. In each of Tables 2 and 3, the symbol "*" indicates Reference Examples.

EP 3 564 280 B1

## Table 2

| | Example | | | | | | | | | | | | | | | |
|---|---|---|---|---|---|---|---|---|---|---|---|---|---|---|---|---|
| | 1 | 2 | 3 | 4 | 5 | 6 | 7* | 8 | 9 | 10* | 11 | 12 | 13 | 14* | 15 | 16 |
| **Reaction condition** | | | | | | | | | | | | | | | | |
| Purity of 1,3,7-octatriene (%) | 99.3 | 99.3 | 99.3 | 99.3 | 99.3 | 99.3 | 99.3 | 99.3 | 99.3 | 99.3 | 99.3 | 99.3 | 99.3 | 99.3 | 99.3 | 99.3 |
| Total content of peroxide and its decomposition (mmol/kg) | <0.015 | <0.015 | <0.015 | <0.015 | <0.015 | <0.015 | <0.015 | <0.015 | <0.015 | <0.015 | <0.015 | <0.015 | <0.015 | <0.015 | <0.015 | <0.015 |
| Use amount of 1,3,7-octatriene (mol) | 0.741 | 0.741 | 0.741 | 0.100 | 0.100 | 0.100 | 1.720 | 1.720 | 1.720 | 0.703 | 0.723 | 0.737 | 0.732 | 0.686 | 0.728 | 0.722 |
| Use amount of styrene (mol) | 1.111 | 1.111 | 1.111 | 1.775 | 1.775 | 1.775 | 0.091 | 0.091 | 0.091 | 1.122 | 1.119 | 1.100 | 1.111 | 1.088 | 1.116 | 1.124 |
| Use amount of butadiene (mol) | 0 | 0 | 0 | 0 | 0 | 0 | 0 | 0 | 0 | 0 | 0 | 0 | 0 | 0 | 0 | 0 |
| Use amount of isoprene (mol) | 0 | 0 | 0 | 0 | 0 | 0 | 0 | 0 | 0 | 0 | 0 | 0 | 0 | 0 | 0 | 0 |
| Total use amount of raw material monomers (mol) | 1.852 | 1.852 | 1.852 | 1.875 | 1.875 | 1.875 | 1.811 | 1.811 | 1.811 | 1.825 | 1.842 | 1.837 | 1.843 | 1.774 | 1.844 | 1.846 |
| Content α of 1,3,7-octatriene (mol%) | 40.01 | 40.01 | 40.01 | 5.33 | 5.33 | 5.33 | 94.98 | 94.98 | 94.98 | 38.52 | 39.27 | 40.11 | 39.73 | 38.67 | 39.50 | 39.10 |
| Use amount of 1,3,7-octatriene (g) | 80.16 | 80.16 | 80.16 | 10.82 | 10.82 | 10.82 | 186.07 | 186.07 | 186.07 | 76.05 | 78.24 | 79.72 | 79.21 | 74.21 | 78.80 | 78.07 |
| Use amount of styrene (g) | 115.71 | 115.71 | 115.71 | 184.87 | 184.87 | 184.87 | 9.48 | 9.48 | 9.48 | 116.86 | 116.50 | 114.61 | 115.69 | 113.32 | 116.18 | 117.05 |
| Use amount of butadiene (g) | 0 | 0 | 0 | 0 | 0 | 0 | 0 | 0 | 0 | 0 | 0 | 0 | 0 | 0 | 0 | 0 |
| Use amount of isoprene (g) | 0 | 0 | 0 | 0 | 0 | 0 | 0 | 0 | 0 | 0 | 0 | 0 | 0 | 0 | 0 | 0 |
| Use amount of cyclohexane (g) | 293.5 | 293.5 | 267.1 | 293.5 | 293.5 | 268.3 | 293.5 | 293.5 | 267.9 | 258.6 | 293.5 | 293.5 | 293.5 | 279.3 | 293.5 | 293.5 |
| Solid content concentration after completion of polymerization reaction (mass%) | 40 | 40 | 40 | 40 | 40 | 40 | 40 | 40 | 40 | 40 | 40 | 40 | 40 | 40 | 40 | 40 |
| Use amount of anionic polymerization initiator (mmol) | 1.03 | 1.97 | 23.18 | 1.06 | 2.22 | 21.88 | 1.44 | 3.20 | 22.00 | 2.02 | 2.03 | 1.99 | 1.99 | 1.92 | 2.04 | 2.00 |
| Use amount of anionic polymerization initiator (containing solvent) (g) | 0.82 | 1.56 | 18.40 | 0.84 | 1.76 | 17.37 | 1.14 | 2.54 | 17.46 | 1.61 | 1.61 | 1.58 | 1.58 | 1.52 | 1.62 | 1.59 |
| (Total amount of raw material monomers)/(Anionic polymerization initiator) (molar ratio) | 1803 | 940 | 80 | 1769 | 845 | 86 | 1258 | 566 | 82 | 901 | 906 | 922 | 925 | 925 | 904 | 922 |
| Kind of Lewis base | THF | THF | THF | THF | THF | THF | THF | THF | THF | THF | Et₂O | NEt₃ | TMEDA | TMEDA | DEE | DTHFP |
| Molecular weight of Lewis base | 72.11 | 72.11 | 72.11 | 72.11 | 72.11 | 72.11 | 72.11 | 72.11 | 72.11 | 72.11 | 74.12 | 101.19 | 116.20 | 116.20 | 118.17 | 184.28 |
| Use amount of Lewis base (g) | 0.370 | 0.710 | 8.356 | 0.382 | 0.800 | 7.889 | 0.519 | 1.154 | 7.932 | 29.202 | 0.753 | 1.008 | 0.116 | 0.446 | 0.120 | 0.184 |
| Use amount of Lewis base (mmol) | 5.14 | 9.85 | 115.90 | 5.30 | 11.10 | 109.40 | 7.20 | 16.00 | 110.00 | 404.96 | 10.17 | 9.96 | 1.00 | 3.84 | 1.02 | 1.00 |
| (Lewis base)/(Anionic polymerization initiator) (molar ratio) | 5 | 5 | 5 | 5 | 5 | 5 | 5 | 5 | 5 | 200 | 5 | 5 | 0.5 | 2 | 0.5 | 0.5 |
| Polymerization temperature (°C) | 50 | 50 | 50 | 50 | 50 | 50 | 50 | 50 | 50 | 50 | 50 | 50 | 50 | 50 | 50 | 50 |
| Polymerization time (hr) | 1.0 | 1.0 | 1.0 | 1.0 | 1.0 | 1.0 | <0.1 | <0.1 | <0.1 | 6.0 | 0.8 | 0.8 | 0.5 | 1.0 | 4.0 | 6.0 |
| Feed time of raw material monomers (hr) | 1.0 | 1.0 | 1.0 | 1.0 | 1.0 | 1.0 | <0.1 | <0.1 | <0.1 | 1.0 | 1.0 | 1.0 | 1.0 | 6.0 | 1.0 | 1.0 |
| Polymerization time including the feed time of raw material monomers (hr) | 2.0 | 2.0 | 2.0 | 2.0 | 2.0 | 2.0 | 4.0 | 4.0 | 4.0 | 7.0 | 1.8 | 1.8 | 1.5 | 7.0 | 5.0 | 7.0 |
| **Reaction results** | | | | | | | | | | | | | | | | |
| Conversion of 1,3,7-octatriene (%) | >99.9 | 98.7 | >99.9 | >99.9 | >99.9 | >99.9 | 99.1 | 99.3 | 99.1 | 40.9 | >99.9 | >99.9 | >99.9 | 43.9 | >99.9 | 99.0 |
| Conversion of styrene (%) | 99.1 | 99.7 | 99.7 | >99.9 | >99.9 | >99.9 | >99.9 | >99.9 | >99.9 | 99.8 | 99.7 | 99.7 | 99.7 | 99.8 | 99.7 | >99.9 |
| Conversion of butadiene (%) | - | - | - | - | - | - | - | - | - | - | - | - | - | - | - | - |
| Conversion of isoprene (%) | - | - | - | - | - | - | - | - | - | - | - | - | - | - | - | - |
| Weight average molecular weight (Mw) of copolymer | 329,700 | 161,900 | 18,700 | 235,200 | 111,800 | 12,500 | 141,800 | 71,300 | 39,700 | 450,400 | 175,700 | 102,000 | 155,800 | 60,000 | 182,700 | 152,700 |
| Molecular weight distribution (Mw/Mn) of copolymer | 1.25 | 1.31 | 1.22 | 1.22 | 1.2 | 1.1 | 1.72 | 1.39 | 1.24 | 1.84 | 1.28 | 1.14 | 1.26 | 1.93 | 1.28 | 1.33 |
| Rate of 1,2-bond of octatriene (%) | 46.2 | 45.9 | 46.2 | 49.8 | 49.4 | 49.9 | 49.2 | 49.9 | 48.6 | 43.6 | 45.6 | 45.8 | 49.7 | - | 49.1 | 47.9 |
| Rate of 1,4-bond of octatriene (%) | 49.7 | 50.1 | 50.3 | 50.2 | 50.6 | 50.1 | 47.7 | 46.8 | 47.7 | 56.4 | 52.5 | 51.8 | 45.4 | - | 43.1 | 49.2 |
| Rate of 3,4-bond of octatriene (%) | 4.1 | 4.0 | 3.5 | Undetected | Undetected | Undetected | 3.1 | 3.3 | 3.7 | Undetected | 1.9 | 2.4 | 4.9 | - | 7.8 | 2.9 |
| Rate of 1,2-bond of butadiene (%) | - | - | - | - | - | - | - | - | - | - | - | - | - | - | - | - |
| Rate of 1,4-bond of butadiene (%) | - | - | - | - | - | - | - | - | - | - | - | - | - | - | - | - |
| Rate of 1,2-bond of isoprene (%) | - | - | - | - | - | - | - | - | - | - | - | - | - | - | - | - |
| Rate of 1,4-bond of isoprene (%) | - | - | - | - | - | - | - | - | - | - | - | - | - | - | - | - |
| Rate of 3,4-bond of isoprene (%) | - | - | - | - | - | - | - | - | - | - | - | - | - | - | - | - |

22

Table 3

| | Example | | | | | | | | | | | | | | Reference Example |
| | 17 | 18 | 19 | 20 | 21 | 22* | 23 | 24* | 25 | 26 | 27 | 28 | 29(1) | 29(2) | 1 |
|---|---|---|---|---|---|---|---|---|---|---|---|---|---|---|---|
| **Reaction condition** | | | | | | | | | | | | | | | |
| Purity of 1,3,7-octatriene (%) | 99.3 | 99.3 | 99.3 | 99.3 | 99.3 | 99.3 | 99.3 | 99.3 | 98.2 | 99.3 | 97.4 | 91.1 | 99.3 | 99.3 | 99.3 |
| Total content of peroxide and its decomposition (mmol/kg) | <0.015 | <0.015 | <0.015 | <0.015 | <0.015 | <0.015 | <0.015 | <0.015 | <0.015 | <0.015 | <0.015 | <0.015 | <0.015 | <0.015 | 3.3 |
| Use amount of 1,3,7-octatriene (mol) | 0.719 | 0.741 | 0.741 | 0.741 | 0.650 | 0.722 | 0.435 | 1.142 | 0.687 | 0.722 | 0.710 | 0.706 | 0.724 | 0.981 | 0.714 |
| Use amount of styrene (mol) | 1.128 | 1.000 | 1.000 | 0.892 | 1.211 | 1.121 | 0.479 | 1.740 | 1.164 | 1.124 | 1.136 | 1.142 | 1.120 | 1.518 | 1.130 |
| Use amount of butadiene (mol) | 0 | 0.111 | 0 | 0.111 | 0 | 0 | 0 | 0 | 0 | 0 | 0 | 0 | 0 | 0 | 0 |
| Use amount of isoprene (mol) | 0 | 0 | 0.111 | 0.111 | 0 | 0 | 0 | 0 | 0 | 0 | 0 | 0 | 0 | 0 | 0 |
| Total use amount of raw material monomers (mol) | 1.847 | 1.852 | 1.852 | 1.855 | 1.861 | 1.843 | 0.914 | 2.882 | 1.852 | 1.846 | 1.846 | 1.849 | 1.844 | 2.499 | 1.845 |
| Content α of 1,3,7-octatriene (mol%) | 38.93 | 40.01 | 40.01 | 39.95 | 34.93 | 39.17 | 47.59 | 39.62 | 37.12 | 39.10 | 38.48 | 38.20 | 39.27 | 39.27 | 38.73 |
| Use amount of 1,3,7-octatriene (g) | 77.76 | 80.16 | 80.16 | 80.16 | 70.33 | 78.10 | 47.06 | 123.52 | 74.36 | 78.07 | 76.84 | 76.40 | 78.35 | 106.15 | 77.28 |
| Use amount of styrene (g) | 117.46 | 104.15 | 104.15 | 92.90 | 126.13 | 116.76 | 49.89 | 181.24 | 121.25 | 117.05 | 118.26 | 118.98 | 116.66 | 158.06 | 117.73 |
| Use amount of butadiene (g) | 0 | 6.00 | 0 | 6.00 | 0 | 0 | 0 | 0 | 0 | 0 | 0 | 0 | 0 | 0 | 0 |
| Use amount of isoprene (g) | 0 | 0 | 7.56 | 7.56 | 0 | 0 | 0 | 0 | 0 | 0 | 0 | 0 | 0 | 0 | 0 |
| Use amount of cyclohexane (g) | 293.5 | 283.2 | 285.5 | 277.7 | 293.5 | 293.5 | 373.2 | 155.4 | 293.5 | 293.5 | 293.5 | 293.5 | 293.5 | 293.5 | 293.5 |
| Solid content concentration after completion of polymerization reaction (mass%) | 40 | 40 | 40 | 40 | 40 | 40 | 20 | 61 | 40 | 40 | 40 | 40 | 40 | 47 | 40 |
| Use amount of anionic polymerization initiator (mmol) | 1.99 | 1.97 | 1.97 | 1.97 | 1.99 | 2.01 | 11.24 | 35.93 | 2.00 | 2.00 | 2.00 | 1.99 | 1.67 | 1.67 | 1.99 |
| Use amount of anionic polymerization initiator (containing solvent) (g) | 1.58 | 1.56 | 1.56 | 1.56 | 1.58 | 1.59 | 8.92 | 28.51 | 1.59 | 1.59 | 1.59 | 1.58 | 1.32 | 1.32 | 1.58 |
| (Total amount of raw material monomers)/(Anionic polymerization initiator) (molar ratio) | 927 | 940 | 940 | 942 | 933 | 919 | 81 | 80 | 927 | 922 | 924 | 928 | 903 | 1500 | 927 |
| Kind of Lewis base | - | THF | THF | THF | THF | THF | THF | THF | THF | DTHFP | THF | THF | Et2O | Et2O | THF |
| Molecular weight of Lewis base | - | 72.11 | 72.11 | 72.11 | 72.11 | 72.11 | 72.11 | 72.11 | 72.11 | 184.28 | 72.11 | 72.11 | 74.12 | 74.12 | 72.11 |
| Use amount of Lewis base (g) | 0.000 | 0.710 | 0.710 | 0.710 | 0.719 | 0.723 | 4.052 | 12.953 | 0.720 | 0.184 | 0.720 | 0.718 | 0.617 | 0.617 | 0.718 |
| Use amount of Lewis base (mmol) | 0.00 | 9.85 | 9.85 | 9.85 | 9.97 | 10.03 | 56.19 | 179.64 | 9.99 | 1.00 | 9.99 | 9.96 | 8.33 | 8.33 | 9.95 |
| (Lewis base)/(Anionic polymerization initiator) (molar ratio) | 0 | 5 | 5 | 5 | 5 | 5 | 5 | 5 | 5 | 0.5 | 5 | 5 | 5 | 5 | 5 |
| Polymerization temperature (°C) | 50 | 50 | 50 | 50 | 30 | 85 | 50 | 50 | 50 | 50 | 50 | 50 | 50 | 50 | 50 |
| Polymerization time (hr) | 2.0 | 1.0 | 1.0 | 1.0 | 8.0 | 0.3 | 0.3 | 0.3 | 2.0 | 6.0 | 1.0 | 2.0 | 2.0 | - | 1.0 |
| Feed time of raw material monomers (hr) | 1.0 | 1.0 | 1.0 | 1.0 | 1.0 | 1.0 | 1.0 | 1.0 | 1.0 | 1.0 | 1.0 | 1.0 | 1.0 | - | 1.0 |
| Polymerization time including the feed time of raw material monomers (hr) | 3.0 | 2.0 | 2.0 | 2.0 | 9.0 | 1.3 | 1.3 | 1.3 | 3.0 | 9.0 | 2.0 | 3.0 | 3.0 | - | 2.0 |
| Polymerization time after addition of raw material monomers (hr) | - | - | - | - | - | - | - | - | - | - | - | - | - | 2.0 | - |
| Feed time of raw material monomers at the time of addition of raw material monomers (hr) | - | - | - | - | - | - | - | - | - | - | - | - | - | 1.0 | - |
| Polymerization time after addition of raw material monomers including the feed time of raw material monomers (hr) | - | - | - | - | - | - | - | - | - | - | - | - | - | 3.0 | - |
| **Reaction results** | | | | | | | | | | | | | | | |
| Conversion of 1,3,7-octatriene (%) | >99.9 | 98.6 | 99.3 | 97.2 | 98.9 | 99.4 | 99.5 | 99.9 | 99.4 | 99.0 | 99.1 | 99.3 | >99.9 | >99.9 | 31.6 |
| Conversion of styrene (%) | 99.6 | 99.7 | 99.7 | 99.7 | >99.9 | >99.9 | >99.9 | >99.9 | >99.9 | >99.9 | >99.9 | >99.9 | >99.9 | >99.9 | 36.4 |
| Conversion of butadiene (%) | - | 98.8 | - | 97.7 | - | - | - | - | - | - | - | - | - | - | - |
| Conversion of isoprene (%) | - | - | 98.4 | 97.3 | - | - | - | - | - | - | - | - | - | - | - |
| Weight average molecular weight (Mw) of copolymer | 125,700 | 146,300 | 152,000 | 158,600 | 112,000 | 441,400 | 13,090 | 34,450 | 133,100 | 134,300 | 121,800 | 105,176 | 139,800 | 206,300 | 32,800 |
| Molecular weight distribution (Mw/Mn) of copolymer | 1.18 | 1.12 | 1.14 | 1.18 | 1.10 | 3.40 | 1.17 | 1.62 | 1.3 | 1.23 | 1.3 | 1.45 | 1.17 | 1.26 | 2.09 |
| Rate of 1,2-bond of octatriene (%) | 44.9 | 46.1 | 45.9 | 45.9 | 41.3 | 50.3 | 54.8 | 53 | 43.3 | - | 44.1 | 42.8 | 45.2 | 45.5 | 41.4 |
| Rate of 1,4-bond of octatriene (%) | 55.1 | 53.9 | 54.1 | 55.1 | 56.8 | 44.2 | 37.6 | 38.5 | 52.4 | - | 51.3 | 54.6 | 51.8 | 51.7 | 58.6 |
| Rate of 3,4-bond of octatriene (%) | Undetected | Undetected | Undetected | Undetected | 1.9 | 5.5 | 7.6 | 8.5 | 4.3 | - | 4.6 | 2.6 | 3.0 | 2.8 | Undetected |
| Rate of 1,2-bond of butadiene (%) | - | 37.2 | - | 36.4 | - | - | - | - | - | - | - | - | - | - | - |
| Rate of 1,4-bond of butadiene (%) | - | 62.8 | - | 63.6 | - | - | - | - | - | - | - | - | - | - | - |
| Rate of 1,2-bond of isoprene (%) | - | - | Undetected | Undetected | - | - | - | - | - | - | - | - | - | - | - |
| Rate of 1,4-bond of isoprene (%) | - | - | 76.8 | 77.7 | - | - | - | - | - | - | - | - | - | - | - |
| Rate of 3,4-bond of isoprene (%) | - | - | 23.2 | 22.3 | - | - | - | - | - | - | - | - | - | - | - |

The Lewis bases described in Tables 2 and 3 are as follows.

THF: Tetrahydrofuran
Et$_2$O: Diethyl ether
NEt$_3$: Triethylamine
TMEDA: N,N,N',N'-Tetramethylethylenediamine
DEE: 1,2-Diethoxyethane
DTHFP: 2,2-Di(2-tetrahydrofuryl)propane

From Tables 2 and 3, in Examples 1 to 28 (of which Examples 7, 10, 14, 22 and 24 are Reference Examples), copolymers containing a structural unit derived from 1,3,7-octatriene and a structural unit derived from styrene were obtained. In addition, by subjecting 1,3,7-trioctatriene having a total content of a peroxide and its decomposition product of 0.30 mmol/kg or less to anionic polymerization with styrene and the like, copolymers containing a structural unit derived from 1,3,7-octatriene and a structural unit derived from styrene could be readily produced while controlling the polymerization. The obtained copolymers (see the Examples) had a narrow molecular weight distribution (Mw/Mn). In addition, in the Examples, there is a tendency that a high conversion can be achieved for a short time. Furthermore, the copolymers obtained in the Examples had a large weight average molecular weight (Mw).

[Example 30] Production of Block Copolymer

(Production of First Styrene Block)

The interior of an SUS316 (registered trademark)-made autoclave having a capacity of 1 L and equipped with a thermometer, an electric heater, an electromagnetic induction agitator, a liquid medicine charging port, and a sampling port was purged with argon, and then, 350.0 g of cyclohexane was charged. Subsequently, the internal pressure was regulated with argon to 0.1 MPaG, and then, the temperature was raised to 50°C over 30 minutes while stirring at 250 rpm. 0.417 g of a cyclohexane solution containing 1.260 mmol/g of sec-butyllithium (0.525 mmol in terms of sec-butyllithium) was charged in an argon gas stream. Subsequently, 5.832 g (0.056 mol) of styrene was charged for a shorter time than 0.1 hours, and then, the internal pressure was regulated with argon to 0.15 MPaG. The point of time when the charging was commenced was defined as 0 hour of commencement of the polymerization reaction, and the reaction was performed for 1 hour (corresponding to the "Polymerization time of first styrene block including the feed time of first styrene" in Table 3) while controlling the liquid temperature to 50°C. According to this, a first styrene block was produced.

(Production of Diene-Based Block)

Subsequently, 0.189 g (2.63 mmol) of tetrahydrofuran (THF) was charged in the autoclave in which the first styrene block had been produced. Promptly thereafter, 27.15 g (0.251 mol) of the 1,3,7-octatriene obtained in Production Example 1 was charged as a diene-based monomer for a shorter time than 0.1 hours, and then, the internal pressure was regulated with argon to 0.20 MPaG.

The point of time when the charging of the diene-based monomer was commenced was defined as 0 hour of commencement of the diene polymerization reaction, and the reaction was performed for 5 hours (corresponding to the "Polymerization time of diene-based block including the feed time of diene-based monomer" in Table 3) while controlling the liquid temperature to 50°C. According to this, a diblock body having a diene block bound to the first styrene block was produced.

(Production of Second Styrene Block)

Subsequently, 5.832 g (0.056 mol) of styrene was charged for a shorter time than 0.1 hours, and the internal pressure was regulated with argon to 0.15 MPaG. The point of time when the charging was commenced was defined as 0 hour of commencement of the polymerization reaction, and the reaction was performed for 2 hours (corresponding to the "Polymerization time of second styrene block including the feed time of second styrene" in Table 3) while controlling the liquid temperature to 50°C. According to this, a triblock body having a first styrene, a diene-based block, and a second styrene block bound to each other was produced.

Thereafter, 0.210 g of a cyclohexane solution containing 2.50 mmol/g of ethanol (0.525 mmol in terms of ethanol) was added, thereby terminating the polymerization reaction.

Subsequently, the whole amount of the obtained polymerization-terminated liquid was transferred into a 3-L eggplant type flask, and almost of all of the solvent was distilled off while heating at 40°C and at 100 kPaA by using a rotatory evaporator. Furthermore, the aforementioned eggplant type flask was transferred into a vacuum dryer and dried for 12 hours while heating at 25°C and at 0.1 kPaA, thereby acquiring 37.57 g of a copolymer in a solid state (referred to as "copolymer A"). The use amount of each of the reagents, the reaction condition, and the reaction results are shown in Table 4.

[Examples 31 to 42, of which Examples 37 to 42 are Reference Examples] Production of Block Copolymers

Copolymers B to M were obtained by performing the polymerization reaction in the same manner as in Example 30, except that each of reagents and the use amount thereof and the reaction condition were changed to those as shown in Table 4. The polymerization time was one described in Table 4. In Examples 33 to 36, the second styrene block was not formed. The use amount of each of the reagents, the reaction condition, and the reaction results are shown in Table 4. In Table 4, the symbol "*" indicates Reference Examples.

# Table 4

| | Example | | | | | | | | | | | | |
|---|---|---|---|---|---|---|---|---|---|---|---|---|---|
| | 30 | 31 | 32 | 33 | 34 | 35 | 36 | 37* | 38* | 39* | 40* | 41* | 42* |
| Copolymer | A | B | C | D | E | F | G | H | I | J | K | L | M |
| Purity of 1,3,7-octatriene (%) | 99.3 | 99.3 | 99.3 | 99.3 | 99.3 | 99.3 | 99.3 | 99.3 | 99.3 | 99.3 | 99.3 | 99.3 | 99.3 |
| Total content of peroxide and its decomposition product (mmol/kg) | <0.015 | <0.015 | <0.015 | <0.015 | <0.015 | <0.015 | <0.015 | <0.015 | <0.015 | <0.015 | <0.015 | <0.015 | <0.015 |
| • First styrene block | | | | | | | | | | | | | |
| Use amount of styrene for first styrene block (mol) | 0.056 | 0.056 | 0.056 | 0.065 | 0.065 | 0.065 | 0.065 | 0.283 | 0.071 | 0.021 | 0.284 | 0.284 | 0.284 |
| Use amount of styrene for first styrene block (g) | 5.832 | 5.832 | 5.832 | 6.770 | 6.770 | 6.770 | 6.770 | 29.473 | 7.350 | 2.205 | 29.544 | 29.554 | 29.542 |
| Use amount of cyclohexane (g) | 350.0 | 350.0 | 350.0 | 350.0 | 350.0 | 350.0 | 350.0 | 293.5 | 293.5 | 293.5 | 293.5 | 293.5 | 293.5 |
| Use amount of anionic polymerization initiator (mmol) | 0.525 | 0.525 | 0.370 | 0.620 | 0.170 | 0.170 | 0.170 | 2.112 | 0.589 | 0.355 | 2.762 | 2.552 | 2.579 |
| Polymerization temperature at the time of forming first styrene block (°C) | 50 | 50 | 50 | 50 | 50 | 50 | 50 | 50 | 50 | 50 | 50 | 50 | 50 |
| Feed time of first styrene (hr) | <0.1 | <0.1 | <0.1 | <0.1 | <0.1 | <0.1 | <0.1 | <0.1 | <0.1 | <0.1 | <0.1 | <0.1 | <0.1 |
| Polymerization time of first styrene block including the feed time of first styrene (hr) | 1.0 | 1.0 | 1.0 | 1.0 | 1.0 | 1.0 | 1.0 | 1.0 | 1.0 | 1.0 | 1.0 | 1.0 | 1.0 |
| Conversion of first styrene (%) | 99.7 | 99.5 | 99.4 | 99.6 | 99.3 | 99.4 | 99.5 | 99.9 | 99.2 | 99.9 | 99.9 | 99.9 | 99.9 |
| Weight average molecular weight (Mw) of first styrene block | 10,000 | 9,900 | 17,100 | 10,100 | 44,900 | 45,400 | 47,000 | 12,200 | 12,400 | 5,800 | 10,600 | 11,300 | 12,100 |
| Molecular weight distribution (Mw/Mn) of first styrene block | 1.03 | 1.03 | 1.03 | 1.03 | 1.03 | 1.03 | 1.04 | 1.03 | 1.05 | 1.04 | 1.04 | 1.04 | 1.04 |
| • Diene-based block | | | | | | | | | | | | | |
| Use amount of 1,3,7-octatriene (mol) | 0.251 | 0.251 | 0.126 | 0.295 | 0.064 | 0.064 | 0.064 | 1.272 | 0.544 | 0.598 | 0.727 | 0.653 | 0.726 |
| Use amount of butadiene (mol) | 0 | 0 | 0.252 | 0 | 0.465 | 0 | 0.232 | 0 | 0 | 0 | 1.089 | 0 | 0 |
| Use amount of isoprene (mol) | 0 | 0 | 0 | 0 | 0 | 0.465 | 0.232 | 0 | 0 | 0 | 0 | 0.981 | 0.433 |
| Use amount of 1,3,7-octatriene (g) | 27.15 | 27.15 | 13.63 | 31.91 | 6.92 | 6.92 | 6.92 | 137.61 | 58.85 | 64.69 | 78.65 | 70.64 | 78.54 |
| Use amount of butadiene (g) | 0.00 | 0.00 | 13.63 | 0.00 | 25.15 | 0.00 | 12.55 | 0.00 | 0.00 | 0.00 | 58.90 | 0.00 | 29.46 |
| Use amount of isoprene (g) | 0.00 | 0.00 | 0.00 | 0.00 | 0.00 | 31.68 | 15.80 | 0.00 | 0.00 | 0.00 | 0.00 | 66.83 | 29.50 |
| Kind of Lewis base | THF | TMEDA | THF | THF | THF | THF | THF | THF | THF | THF | THF | THF | THF |
| Molecular weight of Lewis base | 72.11 | 116.2 | 72.11 | 72.11 | 72.11 | 72.11 | 72.11 | 72.11 | 72.11 | 72.11 | 72.11 | 72.11 | 72.11 |
| Use amount of Lewis base (g) | 0.189 | 0.061 | 0.133 | 0.224 | 0.061 | 0.061 | 0.061 | 0.761 | 0.212 | 0.128 | 0.996 | 0.920 | 0.930 |
| Use amount of Lewis base (mmol) | 2.63 | 0.53 | 1.85 | 3.10 | 0.85 | 0.85 | 0.85 | 10.56 | 2.94 | 1.78 | 13.81 | 12.76 | 12.89 |
| (Lewis base)/(Anionic polymerization initiator) (molar ratio) | 5 | 1 | 5 | 5 | 5 | 5 | 5 | 5 | 5 | 5 | 5 | 5 | 5 |
| Polymerization temperature at the time of forming diene-based block (°C) | 50 | 50 | 50 | 50 | 50 | 50 | 50 | 50 | 50 | 50 | 50 | 50 | 50 |
| Feed time of diene-based monomer (hr) | <0.1 | <0.1 | 0.5 | <0.1 | 1.5 | 1.5 | 1.5 | 1.5 | 1.5 | 1.5 | 1.5 | 1.5 | 1.5 |
| Polymerization time of diene-based block including the feed time of diene-based monomer (hr) | 5.0 | 7.0 | 11.0 | 5.0 | 22.0 | 20.0 | 20.0 | 4.0 | 7.0 | 12.0 | 5.0 | 5.0 | 5.0 |
| Conversion of 1,3,7-octatriene (%) | 95.0 | 95.0 | 95.0 | 95.1 | 95.6 | >99.9 | >99.9 | >99.9 | 99.6 | 98.8 | 99.7 | 99.8 | 99.6 |
| Conversion of butadiene (%) | - | - | 99.7 | - | 99.6 | - | 99.2 | - | - | - | >99.9 | - | 99.8 |
| Conversion of isoprene (%) | - | - | - | - | - | 98.7 | 97.8 | - | - | - | - | >99.9 | >99.9 |
| Weight average molecular weight (Mw) after completion of polymerization of diene block | 78,200 | 69,400 | 145,100 | 80,100 | 615,800 | 67,200 | 614,900 | 103,000 | 199,100 | 236,400 | 125,500 | 101,600 | 13,100 |
| Molecular weight distribution (Mw/Mn) after completion of polymerization of diene block | 1.10 | 1.38 | 1.09 | 1.10 | 1.26 | 1.23 | 1.26 | 1.52 | 1.72 | 2.01 | 1.37 | 1.35 | 1.41 |
| • Second styrene block | | | | | | | | | | | | | |
| Use amount of styrene for second styrene block (mol) | 0.056 | 0.056 | 0.056 | 0 | 0 | 0 | 0 | 0.283 | 0.071 | 0.064 | 0.284 | 0.284 | 0.284 |
| Use amount of styrene for second styrene block (g) | 5.832 | 5.832 | 5.832 | 0 | 0 | 0 | 0 | 29.473 | 7.350 | 6.614 | 29.544 | 29.544 | 29.544 |
| Polymerization temperature at the time of forming second styrene block (°C) | 50 | 50 | 50 | - | - | - | - | 50 | 50 | 50 | 50 | 50 | 50 |
| Feed time of second styrene (hr) | <0.1 | <0.1 | <0.1 | - | - | - | - | <0.1 | <0.1 | <0.1 | <0.1 | <0.1 | <0.1 |
| Polymerization time of second styrene block including the feed time of second styrene (hr) | 2.0 | 2.0 | 2.0 | - | - | - | - | 2.0 | 2.0 | 2.0 | 2.0 | 2.0 | 2.0 |
| Conversion of second styrene (%) | 99.0 | 99.0 | 99.0 | - | - | - | - | 99.9 | 99.8 | 99.4 | 99.4 | 99.5 | 99.5 |
| Weight average molecular weight (Mw) after completion of polymerization of second styrene block | 102,800 | 177,000 | 176,000 | - | - | - | - | 144,400 | 264,600 | 307,700 | 168,200 | 141,700 | 171,800 |
| Molecular weight distribution (Mw/Mn) after completion of polymerization of second styrene block | 1.16 | 1.15 | 1.13 | - | - | - | - | 1.87 | 2.07 | 2.04 | 1.64 | 1.57 | 1.68 |
| Solid content concentration after completion of polymerization reaction (mass%) | 10 | 10 | 10 | 10 | 10 | 11 | 11 | 40 | 20 | 20 | 40 | 40 | 40 |
| Rate of 1,2-bond of octatriene (%) | 50.5 | 50.3 | 51.0 | 50.3 | 54.7 | 53.1 | 53.6 | 49.1 | 49.0 | 48.8 | 48.6 | 52.1 | 50.5 |
| Rate of 1,4-bond of octatriene (%) | 46.7 | 43.2 | 49.0 | 46.6 | 45.3 | 46.9 | 46.4 | 45.9 | 48.0 | 48.3 | 51.4 | 47.9 | 49.5 |
| Rate of 3,4-bond of octatriene (%) | 2.8 | 6.5 | Undetected | 3.1 | Undetected | Undetected | Undetected | 5.0 | 3.0 | 2.9 | Undetected | Undetected | Undetected |
| Rate of 1,2-bond of butadiene (%) | - | - | 24.2 | - | 23.0 | - | 23.4 | - | - | - | 38.3 | - | 23.8 |
| Rate of 1,4-bond of butadiene (%) | - | - | 75.8 | - | 77.0 | - | 76.6 | - | - | - | 61.7 | - | 76.2 |
| Rate of 1,2-bond of isoprene (%) | - | - | - | - | - | Undetected | Undetected | - | - | - | - | Undetected | Undetected |
| Rate of 1,4-bond of isoprene (%) | - | - | - | - | - | 78.2 | 79.0 | - | - | - | - | 77.5 | 77.4 |
| Rate of 3,4-bond of isoprene (%) | - | - | - | - | - | 21.8 | 21.0 | - | - | - | - | 22.5 | 22.6 |

The Lewis bases described in Table 4 are as follows.

THF: Tetrahydrofuran
TMEDA: N,N,N',N'-Tetramethylethylenediamine

From Table 4, in Examples 30 to 42 (of which Examples 37 to 42 are Reference Examples), copolymers containing a structural unit derived from 1,3,7-octatriene and a structural unit derived from styrene were also obtained. In addition, by subjecting 1,3,7-trioctatriene having a total content of a peroxide and its decomposition product of 0.30 mmol/kg or less to anionic polymerization with styrene and the like, copolymers containing a structural unit derived from 1,3,7-octatriene and a structural unit derived from styrene could be readily produced while controlling the polymerization. The obtained copolymers (see the Examples) had a narrow molecular weight distribution (Mw/Mn). In addition, in the Examples, there is a tendency that a high conversion can be achieved for a short time. Furthermore, the copolymers obtained in the Examples had a large weight average molecular weight (Mw).

[Example 43] Production of Hydride

(Preparation of Hydrogenation Catalyst)

In a 1-L three-necked flask having been purged with nitrogen, 25.1 g of a 2-ethylhexanoic acid solution of nickel(II) bis(2-ethylhexanoate) (containing 53.5 mmol of a nickel atom) (manufactured by Wako Pure Chemical Industries, Ltd.) was dissolved in 284.4 g of cyclohexane, 31.8 g (160.3 mmol) of triisobutylaluminum (manufactured by Nippon Aluminum Alkyls, Ltd.) was then added over 10 minutes, and the contents were stirred for 30 minutes, to prepare a hydrogenation catalyst. This hydrogenation catalyst was used for the following hydrogenation reaction.

(Hydrogenation Reaction)

First of all, the same operations as in Example 30 were followed, thereby obtaining a cyclohexane solution containing a diblock body (copolymer A) composed of styrene and 1,3,7-octatriene in an autoclave. The interior of the autoclave was purged with a hydrogen gas and further pressurized with a hydrogen gas to 0.2 MPaG, and subsequently, the autoclave was heated such that the liquid temperature reached 75°C.

Thereafter, the hydrogenation catalyst in an amount corresponding to 150 ppm by mass in terms of a nickel metal relative to the copolymer was added, and the internal pressure was regulated to 0.98 MPaG. By defining the time of first charging the hydrogenation catalyst as 0 hour, the hydrogenation catalyst was charged in an amount of 150 ppm by mass in terms of a nickel metal at 0 hour, 150 ppm by mass in terms of a nickel metal after lapse of 2 hours, 150 ppm by mass in terms of a nickel metal after lapse of 4 hours, and 150 ppm by mass in terms of a nickel metal after lapse of 6 hours, respectively, and the reaction was further performed for an additional 2 hours after the catalyst had been charged after lapse of 6 hours. That is, the charging amount of the hydrogenation catalyst was 600 ppm by mass in total, and the time of the hydrogenation reaction was 8 hours after first introduction of the hydrogenation catalyst.

First of all, to 150 mg of the copolymer before hydrogenation, 1.00 g of deuterochloroform was added, thereby preparing a uniform solution, and this solution was subjected to $^1$H-NMR measurement under the following measurement condition. In addition, to 150 mg of the hydride of the copolymer, 1.00 g of deuterochloroform was added, thereby preparing a uniform solution, and this solution was also subjected to $^1$H-NMR measurement under the following measurement condition.

<$^1$H-NMR Measurement Condition>

Apparatus: "JNM-LA500", manufactured by JEOL Ltd.
Reference material: Tetramethylsilane
Measurement temperature: 25°C
Cumulative number: 254 times

As a result of the $^1$H-NMR measurement, as the binding modes constituted of octatrienes as a structural unit, "peaks capable of being assigned to four hydrogen atoms of the 1,2-bond, four hydrogen atoms of the 1,4-bond, and four hydrogen atoms of the 3,4-bond" were observed at $\delta$4.8 to 5.5 ppm; a "peak capable of being assigned to one hydrogen atom of the 3,4-bond" was observed at $\delta$5.5 to 5.7 ppm; and "peaks capable of being assigned to one hydrogen atom of the 1,2-bond, one hydrogen atom of the 1,4-bond, and one hydrogen atom of the 3,4-bond" were observed at $\delta$5.7 to 5.9 ppm. "Peaks capable of being assigned to five hydrogen atoms of the aromatic ring of the polystyrene block" were observed at $\delta$6.2 to 7.5 ppm.

As the binding modes constituted of butadiene as a structural unit, "peaks capable of being assigned to two hydrogen atoms of the 1,2-bond" were observed at $\delta$4.8 to 5.1 ppm; "peaks capable of being assigned to two hydrogen atoms of the 1,4-bond" were observed at $\delta$5.2 to 5.5 ppm; and a "peak capable of being assigned to one hydrogen atom of the 1,2-bond" was observed at $\delta$5.5 to 5.7 ppm. In addition, as the binding modes of isoprene as a structural unit, "peaks capable of being assigned to two hydrogen atoms of the 3,4-bond" were observed at $\delta$4.6 to 4.8 ppm; a "peak capable of being assigned to one hydrogen atom of the 1,4-bond" was observed at $\delta$5.1 to 5.3 ppm; and a "peak capable of being one hydrogen atom of the 1,2-bond" was observed at $\delta$5.7 to 6.0 ppm.

From the molar number of the double bonds of non-hydrogenated 1,3,7-octatriene and dienes, such as butadiene and isoprene, relative to the total molar number of styrene forming the styrene blocks in the copolymer before the hydrogenation and the molar number of the double bonds of non-hydrogenated 1,3,7-octatriene and dienes, such as butadiene and isoprene, relative to the total molar number of styrene forming the styrene blocks in the copolymer (hydride) after the hydrogenation treatment, a hydrogenation rate as a ratio of the material hydrogenated with the double bonds derived from 1,3,7-octatriene and other conjugated diene compound, such as butadiene and isoprene (generically named as "diene-based compound" including the 1,3,7-octatriene) was calculated to be 96.8%. The results are shown in Table 5.

[Examples 44 to 49]

Hydrides were obtained by performing the hydrogenation reaction in the same manner as in Example 43, except for using copolymers B to G, respectively in place of the copolymer A. The results are shown in Table 5.

Table 5

| | Example | | | | | | |
|---|---|---|---|---|---|---|---|
| | 43 | 44 | 45 | 46 | 47 | 48 | 49 |
| Copolymer | A | B | C | D | E | F | G |
| Hydrogenation rate (%) *1 | 96.8 | 96.9 | 97.6 | 98.1 | 99.1 | 98.5 | 98.1 |

*1: Hydrogenation rate after 8 hours of hydrogenation reaction

[Examples 50 to 51 (both of which are Reference Examples)]

Hydrides were obtained by performing the hydrogenation reaction in the same manner as in Example 43, except for using a copolymer H or I in place of the copolymer A and changing the hydrogenation reaction condition to one as shown in the following Table 6. The hydrogenation rate, the weight average molecular weight of the hydrogenated product, and the molecular weight distribution of the hydrogenated product are shown in Table 6, in which the symbol "*" indicates Reference Examples.

Table 6

| | Example | |
|---|---|---|
| | 50* | 51* |
| Copolymer | H | I |
| Hydrogenation reaction temperature (°C) | 80 | 80 |
| Hydrogenation reaction pressure (MPaG) | 0.8 | 0.8 |
| Hydrogenation reaction time (h) | 31 | 35 |
| Amount of nickel relative to copolymer (ppm) | 4,805 | 4,793 |
| Hydrogenation rate (%) | 98.6 | 98.7 |
| Weight average molecular weight | 137,500 | 239,000 |
| Molecular weight distribution | 1.96 | 2.45 |

[Example 52]

The copolymer obtained in Example 26 was cooled to 25°C, 200 g of the polymer solution was extracted, and subsequently, 290 g of cyclohexane was introduced.

A hydrogenation catalyst was prepared in the same manner as in Example 43 and used for the following hydrogenation reaction.

(Hydrogenation Reaction)

The interior of the autoclave having the aforementioned polymerization solution resided therein was purged with a hydrogen gas and further pressurized with a hydrogen gas to 0.2 MPaG, and subsequently, the autoclave was heated such that the liquid temperature reached 80°C. Thereafter, 4.84 g of the aforementioned hydrogenation catalyst (corresponding to 384 ppm by mass in terms of a nickel metal relative to the copolymer) was added, subsequently, an internal pressure was regulated with a hydrogen gas to 0.8 MPaG, and the contents were allowed to react for 2 hours.
Thereafter, 4.84 g of the aforementioned hydrogenation catalyst (corresponding to 384 ppm by mass in terms of a nickel metal relative to the copolymer) was added four times at intervals of 2 hours. The use amount of the hydrogenation catalyst was 1,920 ppm by mass in total as expressed in terms of a nickel metal relative to the copolymer, and the time of the hydrogenation reaction was 10 hours after first introduction of the hydrogenation catalyst.
The hydrogenation rate of the obtained hydride was determined by means of the $^1$H-NMR measurement in the same manner as in Example 43. In addition, the weight average molecular weight and the molecular weight distribution of the hydride were determined according to the aforementioned measurement method. The hydrogenation reaction condition and the results are shown in Table 7.

Table 7

|  | Example |
|---|---|
|  | 52 |
| Hydrogenation reaction temperature (°C) | 80 |
| Hydrogenation reaction pressure (MPaG) | 0.8 |
| Hydrogenation reaction time (h) | 10 |
| Amount of nickel relative to copolymer (ppm) | 1,920 |
| Hydrogenation rate (%) | 99.0 |
| Weight average molecular weight | 155,700 |
| Molecular weight distribution | 1.36 |

Industrial Applicability

The copolymer of the present invention is useful as a functional material, such as a modifier.

**Claims**

1. A copolymer comprising a structural unit derived from 1,3,7-octatriene and a structural unit derived from styrene and having a molecular weight distribution (Mw/Mn) of 1.5 or less, wherein the molecular weight distribution is measured according to the description.

2. The copolymer according to claim 1, having a weight average molecular weight (Mw) of 1,000 to 1,000,000, wherein $M_W$ is measured according to the description.

3. The copolymer according to claim 1 or 2, having a weight average molecular weight (Mw) of 5,000 to 900,000.

4. The copolymer according to any one of claims 1 to 3, having a weight average molecular weight (Mw) of 50,000 to 700,000.

5. The copolymer according to any one of claims 1 to 4, having a living anionic active species at a molecular end thereof.

6. The copolymer according to any one of claims 1 to 4, not having a living anionic active species at a molecular end thereof.

7. The copolymer according to any one of claims 1 to 6, further comprising a structural unit derived from a conjugated diene compound having 4 or more carbon atoms.

8. The copolymer according to claim 7, wherein the conjugated diene compound having 4 or more carbon atoms is at least one selected from the group consisting of butadiene, isoprene, 2,3-dimethyl-1,3-butadiene, 4,5-diethyl-1,3-butadiene, 2-phenyl-1,3-butadiene, 2-hexyl-1,3-butadiene, 2-benzyl-1,3-butadiene, 2-p-toluyl-1,3-butadiene, 2-methyl-1,3-pentadiene, 3-methyl-1,3-pentadiene, 2,3-dimethyl-1,3-pentadiene, 2,3-diethyl-1,3-pentadiene, 1,3-hexadiene, 2,3-dimethyl-1,3-hexadiene, 2,3-diethyl-1,3-heptadiene, 3-butyl-1,3-octadiene, 2,3-dimethyl-1,3-octadiene, 4,5-diethyl-1,3-octadiene, 1,3-cyclohexadiene, and myrcene.

9. The copolymer according to any one of claims 1 to 8, wherein the binding form between the structural unit derived from 1,3,7-octatriene and the structural unit derived from styrene, and in the case of further comprising the structural unit derived from the conjugated diene compound, is a random, a complete alternate, a gradient, a block, a tapered binding form or combinations thereof.

10. A hydride of the copolymer according to any one of claims 1 to 4 and 6 to 9.

**Patentansprüche**

1. Copolymer, das eine von 1,3,7-Octatrien abgeleitete Struktureinheit und eine von Styrol abgeleitete Struktureinheit umfasst und eine Molekulargewichtsverteilung (Mw/Mn) von 1,5 oder weniger aufweist, wobei die Molekulargewichtsverteilung gemäß der Beschreibung gemessen wird.

2. Copolymer nach Anspruch 1, das ein gewichtsmittleres Molekulargewicht (Mw) von 1.000 bis 1.000.000 aufweist, wobei Mw gemäß der Beschreibung gemessen wird.

3. Copolymer nach Anspruch 1 oder 2, das ein gewichtsmittleres Molekulargewicht (Mw) von 5.000 bis 900.000 aufweist.

4. Copolymer nach einem der Ansprüche 1 bis 3, das ein gewichtsmittleres Molekulargewicht (Mw) von 50.000 bis 700.000 aufweist.

5. Copolymer nach einem der Ansprüche 1 bis 4, das eine lebende anionische aktive Spezies an einem seiner Molekülenden aufweist.

6. Copolymer nach einem der Ansprüche 1 bis 4, das keine lebende anionische aktive Spezies an einem seiner Molekülenden aufweist.

7. Copolymer nach einem der Ansprüche 1 bis 6, weiter umfassend eine Struktureinheit, die von einer konjugierten Dienverbindung mit 4 oder mehr Kohlenstoffatomen abgeleitet ist.

8. Copolymer nach Anspruch 7, wobei die konjugierte Dienverbindung mit 4 oder mehr Kohlenstoffatomen mindestens eine ist, ausgewählt aus der Gruppe, bestehend aus Butadien, Isopren, 2,3-Dimethyl-1,3-butadien, 4,5-Diethyl-1,3-butadien, 2-Phenyl-1,3-butadien, 2-Hexyl-1,3-butadien, 2-Benzyl-1,3-butadien, 2-p-Toluyl-1,3-butadien, 2-Methyl-1,3-pentadien, 3-Methyl-1,3-pentadien, 2,3-Dimethyl-1,3-pentadien, 2,3-Diethyl-1,3-pentadien, 1,3-Hexadien, 2,3-Dimethyl-1,3-hexadien, 2,3-Diethyl-1,3-heptadien, 3-Butyl-1,3-octadien, 2,3-Dimethyl-1,3-octadien, 4,5-Diethyl-1,3-octadien, 1,3-Cyclohexadien und Myrcen.

9. Copolymer nach einem der Ansprüche 1 bis 8, wobei die Bindungsform zwischen der Struktureinheit, die von 1,3,7-Octatrien abgeleitet ist, und der Struktureinheit, die von Styrol abgeleitet ist, und im Falle, dass es weiter die Struktureinheit, die von der konjugierten Dienverbindung abgeleitet ist, umfasst, eine statistische, eine vollständig alternierende, eine Gradienten-, eine Block-, eine verjüngte Bindungsform oder Kombinationen davon ist.

10. Hydrid des Copolymers nach einem der Ansprüche 1 bis 4 und 6 bis 9.

**Revendications**

1. Copolymère comprenant une unité structurale dérivée du 1,3,7-octatriène et une unité structurale dérivée du styrène et ayant une distribution du poids moléculaire (Mw/Mn) de 1,5 ou moins, où la distribution du poids moléculaire est mesurée conformément à la description.

**2.** Copolymère selon la revendication 1, ayant un poids moléculaire moyen en poids (Mw) situé dans l'intervalle allant de 1000 à 1 000 000, où Mw est mesuré conformément à la description.

**3.** Copolymère selon la revendication 1 ou 2, ayant un poids moléculaire moyen en poids (Mw) situé dans l'intervalle allant de 5000 à 900 000.

**4.** Copolymère selon l'une quelconque des revendications 1 à 3, ayant un poids moléculaire moyen en poids (Mw) situé dans l'intervalle allant de 50 000 à 700 000.

**5.** Copolymère selon l'une quelconque des revendications 1 à 4, ayant une espèce active anionique vivante à une de ses extrémités moléculaires.

**6.** Copolymère selon l'une quelconque des revendications 1 à 4, n'ayant pas d'espèce active anionique vivante à une de ses extrémités moléculaires.

**7.** Copolymère selon l'une quelconque des revendications 1 à 6, comprenant en outre, une unité structurale dérivée d'un composé diène conjugué ayant 4 atomes de carbone ou plus.

**8.** Copolymère selon la revendication 7, dans lequel le composé diène conjugué ayant 4 atomes de carbone ou plus est au moins l'un choisi parmi le groupe consistant en le butadiène, l'isoprène, le 2,3-diméthyl-1,3-butadiène, le 4,5-diéthyl-1,3-butadiène, le 2-phényl-1,3-butadiène, le 2-hexyl-1,3-butadiène, le 2-benzyl-1,3-butadiène, le 2-p-tolyl-1,3-butadiène, le 2-méthyl-1,3-pentadiène, le 3-méthyl-1,3-pentadiène, le 2,3-diméthyl-1,3-pentadiène, le 2,3-diéthyl-1,3-pentadiène, le 1,3-hexadiène, le 2,3-diméthyl-1,3-hexadiène, le 2,3-diéthyl-1,3-heptadiène, le 3-butyl-1,3-octadiène, le 2,3-diméthyl-1,3-octadiène, le 4,5-diéthyl-1,3-octadiène, le 1,3-cyclohexadiène et le myrcène.

**9.** Copolymère selon l'une quelconque des revendications 1 à 8, dans lequel l'enchainement entre l'unité structurale dérivée du 1,3,7-octatriène et l'unité structurale dérivée du styrène, et dans le cas de la présence supplémentaire de l'unité structurale dérivée du composé diène conjugué, est un enchainement statistique, totalement alternatif, à gradient, séquencé, dégressif ou des combinaisons de ceux-ci.

**10.** Hybride du copolymère selon l'une quelconque des revendications 1 à 4 et 6 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 49016269 B
- JP 49016268 B
- JP H11502541 A
- JP 2016216385 A
- JP 47017703 A
- JP 46024003 B

**Non-patent literature cited in the description**

- *The Journal of Organic Chemistry,* 1963, vol. 28, 2699-2703
- *Advanced Synthesis & Catalysis,* 2008, vol. 350, 431-438